# EUROPEAN PATENT APPLICATION

(11) **EP 4 804 550 A1**
(43) Date of publication of application: **09.09.2026**
(21) Application number: 24885294.9
(22) Date of filing: 11.09.2024
(51) Int. Cl.: H04N 23/667, G06T 7/20, H04N 23/60

(54) **INFORMATION PROCESSING DEVICE, IMAGING DEVICE, AND PROGRAM**

(30) Priority: 30.10.2023 JP 2023185989
(71) Applicant: Sony Semiconductor Solutions Corporation, Atsugi-shi, Kanagawa 243-0014 (JP)
(72) Inventor: HOSOE Takashi, Atsugi-shi, Kanagawa 243-0014 (JP)
(74) Representative: Müller Hoffmann & Partner
(86) International application number: PCT/JP2024/032465
(87) International publication number: WO 2025/094517

(57) **Abstract**

Provided are an information processing apparatus, an imaging device, and a program capable of achieving compatibility between power consumption and detection accuracy.

An information processing apparatus according to the present disclosure includes a motion detection unit that performs motion extraction and motion determination of a subject on a basis of a plurality of first pixel signals generated by a plurality of first pixels, a distance detection unit that performs distance determination to the subject on a basis of a plurality of second pixel signals generated by a plurality of second pixels, and a mode control unit that causes a moving object detection mode in which low-resolution image information is acquired to transition to a feature extraction mode in which medium-resolution image information is acquired or an imaging mode in which high-resolution image information is acquired on a basis of a result of the motion determination and a result of the distance determination.

## Description

### TECHNICAL FIELD

The present disclosure relates to an information processing apparatus, an imaging device, and a program.

### BACKGROUND ART

In related art, monitoring cameras have been widely used in fields such as crime prevention and traffic. Since the monitoring camera basically needs to be constantly driven, there is a problem that power consumption increases when an image is constantly imaged with high resolution.

Furthermore, there is a technology for realizing person detection for an in-vehicle monitoring camera such as a vehicle break-in countermeasure with low power. In this technology, in a moving object detection mode with low power consumption, a low-resolution image by pixel addition is acquired, and the motion (event) of a subject is detected on the basis of the image. When the motion of the subject is detected in the moving object detection mode with high power consumption, the mode transitions to an imaging mode. In the imaging mode, an image is imaged with high resolution without pixel addition.

### CITATION LIST

### PATENT DOCUMENT

Patent Document 1: Japanese Patent Application Laid-Open No. 2021-150814

### SUMMARY OF THE INVENTION

### PROBLEMS TO BE SOLVED BY THE INVENTION

However, although the moving object detection mode has low power, since the moving object detection mode reacts to all moving objects, there are many erroneous detections, and an object other than a person may be detected. Since the moving object detection mode erroneously transitions to the imaging mode, power may not be low. Furthermore, when the resolution is increased in order to avoid the erroneous detection, detection accuracy increases, but the power consumption increases. As described above, power consumption and detection accuracy are in a trade-off relationship, and it is difficult to achieve compatibility between power consumption and detection accuracy.

Therefore, the present disclosure provides an information processing apparatus, an imaging device, and a program capable of achieving compatibility between power consumption and detection accuracy.

### SOLUTIONS TO PROBLEMS

An information processing apparatus according to a first aspect of the present disclosure includes a motion detection unit that performs motion extraction and motion determination of a subject on a basis of a plurality of first pixel signals generated by a plurality of first pixels, a distance detection unit that performs distance determination to the subject on a basis of a plurality of second pixel signals generated by a plurality of second pixels, and a mode control unit that causes a moving object detection mode in which low-resolution image information is acquired to transition to a feature extraction mode in which medium-resolution image information is acquired or an imaging mode in which high-resolution image information is acquired on a basis of a result of the motion determination and a result of the distance determination. Therefore, for example, the information processing apparatus can prevent the mode transition due to erroneous detection of the motion of the subject and the mode transition due to a case where the distance to the subject is long, and can achieve compatibility between power consumption and detection accuracy.

Furthermore, in the first aspect, the first pixel is a normal pixel, and the second pixel is a phase difference detection pixel. Therefore, for example, since the distance detection using the phase difference detection pixel is performed, it is possible to realize low power.

Furthermore, in the first aspect, the motion detection unit extracts, as information of motion, a difference between luminance information of the plurality of first pixel signals generated in a plurality of pixel blocks including the plurality of first pixels and the plurality of second pixels at a first point in time that is a reference point in time and luminance information of the plurality of first pixel signals generated in a plurality of the pixel blocks at a second point in time that is a point in time one point in time before the reference point in time, and performs the motion determination on a basis of the difference. Therefore, for example, the amount of data that needs to be A/D converted in an ADC decreases in the moving object detection mode, and power consumption in the ADC decreases.

Furthermore, in the first aspect, the distance detection unit calculates depth information of the plurality of second pixel signals generated in a plurality of pixel blocks including the plurality of first pixels and the plurality of second pixels, and performs the distance determination to the subject. Therefore, for example, the amount of data that needs to be A/D converted in the ADC can be suppressed, and power consumption in the ADC decreases.

Furthermore, in the first aspect, the mode control unit causes the moving object detection mode to transition to the imaging mode in a case where it is determined that there is motion of the subject by the motion determination and it is determined that the distance to the subject determined by the distance determination is within a predetermined distance. Therefore, for example, the information processing apparatus can prevent the mode transition due to erroneous detection of the motion of the subject and the mode transition due to a case where the distance to the subject is long, and can achieve compatibility between power consumption and detection accuracy.

Furthermore, in the first aspect, the information processing apparatus further includes a feature detection unit that performs feature extraction and feature determination of the subject on a basis of the plurality of first pixel signals generated by the plurality of first pixels, in which the mode control unit causes the moving object detection mode to transition to the feature extraction mode in a case where it is determined that there is motion of the subject by the motion determination and it is determined that the distance to the subject determined by the distance determination is within a predetermined distance, and the mode control unit causes the feature extraction mode to transition to the imaging mode in a case where it is determined that a specific feature is detected from the subject by the feature determination. Therefore, for example, since the information processing apparatus can cause the mode to transition to the imaging mode only when necessary in accordance with the feature information, it is possible to prevent unnecessary transition to the imaging mode due to erroneous detection.

Furthermore, in the first aspect, the distance detection unit performs the distance determination by using one or the plurality of pixel blocks included in a moving object detection area in which it is determined that there is motion of the subject. Therefore, for example, the distance detection unit can eliminate the need to calculate depth information in an unnecessary region, and can realize power saving.

Furthermore, in the first aspect, in a case where there is a plurality of the moving object detection areas, the distance detection unit performs the distance determination by using one or the plurality of pixel blocks included in a largest moving object detection area among the plurality of moving object detection areas. Therefore, for example, the distance detection unit can eliminate the need to calculate depth information in an unnecessary region, and can realize power saving.

Furthermore, in the first aspect, the motion detection unit further determines a shape of a moving object detection area in which it is determined that there is motion of the subject, and the distance detection unit performs the distance determination to the subject in accordance with a determination result of the shape. Therefore, for example, the information processing apparatus can prevent the mode transition due to erroneous detection of the motion of the subject and the mode transition due to a case where the distance to the subject is long, and can further improve the detection accuracy. Furthermore, the information processing apparatus can achieve compatibility between power consumption and detection accuracy.

Furthermore, in the first aspect, the motion detection unit performs the shape determination by comparing a size of the moving object detection area with a threshold, and performs the distance determination by comparing a position in a screen of the moving object detection area for which the shape determination is performed with a threshold. Therefore, for example, the information processing apparatus can prevent the mode transition due to erroneous detection of the motion of the subject and the mode transition due to a case where the distance to the subject is long, and can further improve the detection accuracy. Furthermore, the information processing apparatus can achieve compatibility between power consumption and detection accuracy.

Furthermore, in the first aspect, in a case where the size of the moving object detection area is equal to or larger than the threshold and the position of the moving object detection area in the screen is equal to or smaller than the threshold, the distance detection unit performs the distance determination to the subject. Therefore, for example, the information processing apparatus can prevent the mode transition due to erroneous detection of the motion of the subject and the mode transition due to a case where the distance to the subject is long, and can further improve the detection accuracy. Furthermore, the information processing apparatus can achieve compatibility between power consumption and detection accuracy.

Furthermore, in the first aspect, the information processing apparatus further includes a previous frame determination unit that performs comprehensive determination of the motion determination and the distance determination by further using a result of the motion determination and a result of the distance determination at a second point in time that is a point in time one point in time before a reference point in time, in addition to a result of the motion determination and a result of the distance determination at a first point in time that is the reference point in time. Therefore, for example, the information processing apparatus can prevent the mode transition due to erroneous detection of the motion of the subject and the mode transition due to a case where the distance to the subject is long, and can further improve the detection accuracy. Furthermore, the information processing apparatus can achieve compatibility between power consumption and detection accuracy.

Furthermore, in the first aspect, the plurality of second pixel signals is generated on a basis of reflected light of light from the subject received by the plurality of second pixels included in a TOF sensor or a sensor using a monocular ranging method. Therefore, for example, the information processing apparatus can prevent the mode transition due to erroneous detection of the motion of the subject and the mode transition due to a case where the distance to the subject is long, and can improve the detection accuracy. Furthermore, the information processing apparatus can realize low power by activating the TOF sensor after it is determined that there is motion of the subject.

Furthermore, an imaging device according to a second aspect of the present disclosure includes a pixel array unit in which a plurality of first pixels and a plurality of second pixels are arrayed in a two-dimensional array, a row scanning circuit that drives the plurality of first pixels and the plurality of second pixels to output the plurality of first pixel signals and the plurality of second pixel signals on a basis of a vertical synchronization signal, a motion detection unit that performs motion extraction and motion determination of a subject on a basis of the plurality of first pixel signals, a distance detection unit that performs distance determination to the subject on a basis of the plurality of second pixel signals, and a mode control unit that causes a moving object detection mode in which low-resolution image information is acquired to transition to a feature extraction mode in which medium-resolution image information is acquired or an imaging mode in which high-resolution image information is acquired on a basis of a result of the motion determination and a result of the distance determination. Therefore, for example, the imaging device can prevent the mode transition due to erroneous detection of the motion of the subject and the mode transition due to a case where the distance to the subject is long, and can achieve compatibility between power consumption and detection accuracy.

Furthermore, in a second aspect, the row scanning circuit drives one of the plurality of first pixels or the plurality of second pixels in one pixel block including the plurality of first pixels and the plurality of second pixels to output the plurality of first pixel signals or the plurality of second pixel signals, and then drives another of the plurality of first pixels or the plurality of second pixels included in the pixel block to output the plurality of first pixel signals or the plurality of second pixel signals. Therefore, for example, the distance detection unit calculates the depth information only with one or a plurality of pixel blocks included in the moving object detection area instead of the entire screen, and thus, the calculation of the depth information in an unnecessary region can be made unnecessary, and power saving can be realized.

Furthermore, in a second aspect, the row scanning circuit drives the plurality of second pixels in the pixel array unit to output the plurality of second pixel signals, and then drives the plurality of first pixels in the pixel array unit to output the plurality of first pixel signals. Therefore, for example, since each of the second pixel signals and each of the first pixel signals are continuously read, these pieces of information can be collectively stored in a continuous region in the memory.

Furthermore, in a second aspect, the row scanning circuit drives the plurality of first pixels in the pixel array unit to output the plurality of first pixel signals, and then drives the plurality of second pixels in the pixel array unit to output the plurality of second pixel signals. Therefore, for example, since each of the first pixel signals and each of the second pixel signals are continuously read, these pieces of information can be collectively stored in a continuous region in the memory.

Furthermore, in the second aspect, the row scanning circuit drives the plurality of second pixels to output the plurality of second pixel signals in a line including a moving object detection area in which it is determined that there is motion of the subject. Therefore, for example, since the second pixel signal of the second pixel is not read in an unnecessary region other than the moving object detection area, the ADC does not perform the AD conversion of the second pixel signal in this line, and the AD conversion in the unnecessary region can be made unnecessary, and power saving can be realized.

Furthermore, in the second aspect, the row scanning circuit skips the driving of the plurality of second pixels in a case where it is not determined that there is the motion of the subject. Therefore, for example, since the ADC can eliminate the need for AD conversion of all the second pixel signals, power saving can be further realized.

Furthermore, a program according to a third aspect of the present disclosure includes performing motion extraction and motion determination of a subject on a basis of a plurality of first pixel signals generated by a plurality of first pixels, performing distance determination to the subject on a basis of a plurality of second pixel signals generated by a plurality of second pixels, and causing a moving object detection mode in which low-resolution image information is acquired to transition to a feature extraction mode in which medium-resolution image information is acquired or an imaging mode in which high-resolution image information is acquired on a basis of a result of the motion determination and a result of the distance determination. Therefore, for example, the program can prevent the mode transition due to erroneous detection of the motion of the subject and the mode transition due to a case where the distance to the subject is long, and can achieve compatibility between power consumption and detection accuracy.

### BRIEF DESCRIPTION OF DRAWINGS

Fig. 1 is a block diagram illustrating a configuration of an imaging device 100 according to a first embodiment.
Fig. 2 is a block diagram illustrating a configuration of an image sensor 10 according to the first embodiment.
Fig. 3 is a block diagram illustrating configurations of the image sensor 10 and an information processing apparatus 200 in another example of the first embodiment.
Fig. 4 is a diagram illustrating a structure of a pixel array unit 7 according to the first embodiment.
Fig. 5 is a diagram illustrating a configuration of a phase difference detection pixel according to the first embodiment.
Fig. 6 is a diagram illustrating a resolution of image information acquired in each mode from the pixel array unit 7 according to the first embodiment.
Fig. 7 is a diagram for explaining mode transition according to the first embodiment and mode transition according to a comparative example.
Fig. 8 is an example of a flowchart of a sensor control unit 15 according to the first embodiment.
Fig. 9 is a diagram for explaining an example of a method for reading the pixel array unit 7 according to the first embodiment.
Fig. 10 is a diagram for explaining another example of the method for reading the pixel array unit 7 according to the first embodiment.
Fig. 11 is a diagram for explaining still another example of the method for reading the pixel array unit 7 according to the first embodiment.
Fig. 12 is a block diagram illustrating a configuration of an image sensor 10 according to a second embodiment.
Fig. 13 is a block diagram illustrating configurations of the image sensor 10 and an information processing apparatus 200 in another example of the second embodiment.
Fig. 14 is an image diagram of a shape determination result according to the second embodiment.
Fig. 15 is an example of a flowchart of a sensor control unit 15 according to the second embodiment.
Fig. 16 is a block diagram illustrating a configuration of an image sensor 10 according to a third embodiment.
Fig. 17 is a block diagram illustrating configurations of the image sensor 10 and an information processing apparatus 200 in another example of the third embodiment.
Fig. 18 is an example of a flowchart of a sensor control unit 15 according to the third embodiment.
Fig. 19 is a block diagram illustrating a configuration of an image sensor 10 according to a fourth embodiment.
Fig. 20 is a block diagram illustrating configurations of the image sensor 10 and an information processing apparatus 200 in another example of the fourth embodiment.
Fig. 21 is a diagram illustrating a resolution of image information acquired in each mode in a pixel array unit 7 according to the fourth embodiment.
Fig. 22 is a diagram for explaining mode transition according to the fourth embodiment.
Fig. 23 is an example of a flowchart of a sensor control unit 15 according to a fourth embodiment.
Fig. 24 is a block diagram illustrating configurations of an image sensor 10 and a TOF sensor 35 according to a fifth embodiment.
Fig. 25 is a block diagram illustrating configurations of the image sensor 10, an information processing apparatus 200, and the TOF sensor 35 in another example of the fifth embodiment.
Fig. 26 is an example of a flowchart of a sensor control unit 15 according to the fifth embodiment.
Fig. 27 is a diagram for explaining a method for reading a pixel array unit 7 and an activation timing of the TOF sensor 35 according to the fifth embodiment.
Fig. 28 is a block diagram illustrating configurations of an image sensor 10 and a TOF sensor 35 according to a sixth embodiment.
Fig. 29 is a block diagram illustrating configurations of the image sensor 10, an information processing apparatus 200, and the TOF sensor 35 in another example of the sixth embodiment.
Fig. 30 is an example of a flowchart of a sensor control unit 15 according to the sixth embodiment.
Fig. 31 is a block diagram illustrating configurations of an image sensor 10 and a TOF sensor 35 according to a seventh embodiment.
Fig. 32 is a block diagram illustrating configurations of the image sensor 10, an information processing apparatus 200, and the TOF sensor 35 in another example of the seventh embodiment.
Fig. 33 is an example of a flowchart of a sensor control unit 15 according to the seventh embodiment.
Fig. 34 illustrates an example of a hardware configuration of an information processing apparatus 200 according to an eighth embodiment.
Fig. 35 is a block diagram illustrating a configuration example of a vehicle control system.
Fig. 36 is a diagram illustrating an example of a sensing region.

### MODE FOR CARRYING OUT THE INVENTION

Hereinafter, embodiments of the present disclosure will be described with reference to the drawings.

### (First Embodiment)

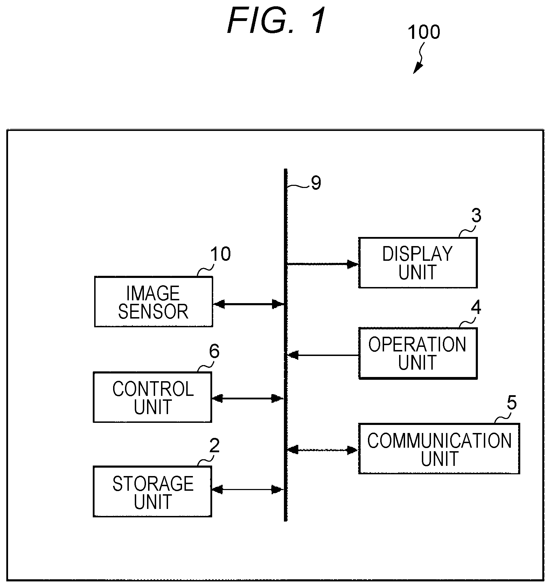

Fig. 1 is a block diagram illustrating a configuration of an imaging device 100 according to a first embodiment.

The imaging device 100 is, for example, an in-vehicle monitoring camera, and is used by being installed in a vehicle. Furthermore, in addition to the in-vehicle monitoring camera, the imaging device 100 may be installed at a certain place and used as, for example, a monitoring and security camera that detects a person or an animal approaching a store, a restricted area, or the like.

As illustrated in Fig. 1, the imaging device 100 includes an image sensor 10, a control unit 6, a storage unit 2, a display unit 3, an operation unit 4, and a communication unit 5. These units are electrically connected to each other via a bus 9.

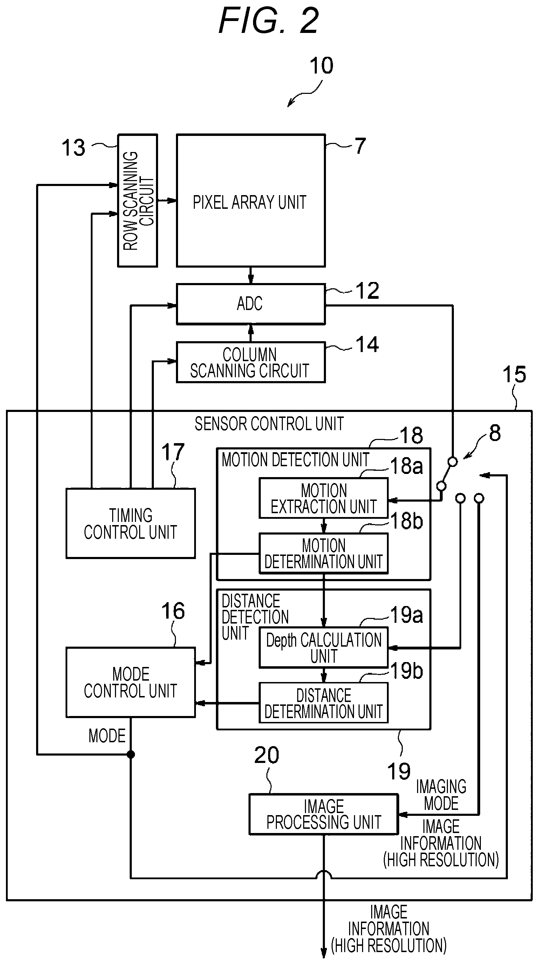

The image sensor 10 includes, for example, a solid-state imaging element (pixel array unit 7) such as a charge coupled device (CCD) sensor or a complemented metal oxide semiconductor (CMOS) sensor. Furthermore, the image sensor 10 includes an optical system including a plurality of lenses, a diaphragm, a shutter, and the like. The image sensor 10 outputs acquired image information to the storage unit 2 and the display unit 3 as necessary. Note that, a detailed configuration of the image sensor 10 will be described later with reference to Fig. 2.

The control unit 6 includes, for example, a central processing unit (CPU) or the like. The control unit 6 executes various calculations on the basis of various programs stored in the storage unit 2 and integrally controls each unit of the imaging device 100.

The storage unit 2 includes a nonvolatile memory in which various programs necessary for processing of the control unit 6 and image information acquired by the image sensor 10 are stored, and a volatile memory used as a work region of the control unit 6. Note that, the various programs may be read from a portable recording medium such as an optical disk or a semiconductor memory, or may be downloaded from a server device on a network.

The display unit 3 includes, for example, a liquid crystal display, an electro-luminescence (EL) display, or the like. The display unit 3 displays the image information acquired by the image sensor 10 on a screen as necessary under the control of the control unit 6.

The operation unit 4 is various operation units such as a push button type and a proximity type, and detects an operation by a user and outputs the operation to the control unit 6.

The communication unit 5 communicates with an external device in a wired or wireless manner. Note that, examples of the external device that communicates with the imaging device 100 include a mobile phone (including a smartphone), a personal computer (PC), a server device on a network, and the like.

Note that, in the example illustrated in Fig. 1, the image sensor 10, the control unit 6, the storage unit 2, the display unit 3, and the operation unit 4 are provided in the same device, but these units may be provided in a plurality of devices in a distributed manner. In this case, for example, the image sensor 10 is provided in the imaging device 100, and the other units (control unit 6, storage unit 2, operation unit 4, and the like) are provided in separate devices.

That is, the imaging device 100 may include at least the image sensor 10. The device separate from the imaging device 100 may be a dedicated device or a general-purpose device. In a case where the separate device is a general-purpose device, the separate device may be a mobile phone (including a smartphone), a PC, a server device on a network, or the like.

Fig. 2 is a block diagram illustrating a configuration of the image sensor 10 according to the first embodiment.

As illustrated in Fig. 2, the image sensor 10 includes the pixel array unit 7, an analog to digital converter (ADC) 12, a row scanning circuit 13, a column scanning circuit 14, and a sensor control unit 15. The sensor control unit 15 includes a mode control unit 16, a timing control unit 17, a motion detection unit 18, a distance detection unit 19, an image processing unit 20, and a switch 8.

Furthermore, the motion detection unit 18 includes a motion extraction unit 18a and a motion determination unit 18b, and the distance detection unit 19 includes a depth calculation unit 19a and a distance determination unit 19b.

Here, in the present embodiment, two modes of a moving object detection mode and an imaging mode are prepared. These two modes transition by the control of the mode control unit 16.

The moving object detection mode is a mode in which image information having a resolution relatively lower than that of image information used in the imaging mode is acquired, and is a mode in which the motion of a subject is detected on the basis of the image information having the lower resolution. Note that, in the following description, the image information acquired in the moving object detection mode is also referred to as low-resolution image information for the sake of convenience.

The imaging mode is a mode in which image information having a resolution relatively higher than that of image information used in the moving object detection mode is acquired and imaging is performed. Note that, in the following description, the image information acquired in the imaging mode is also referred to as high-resolution image information for the sake of convenience.

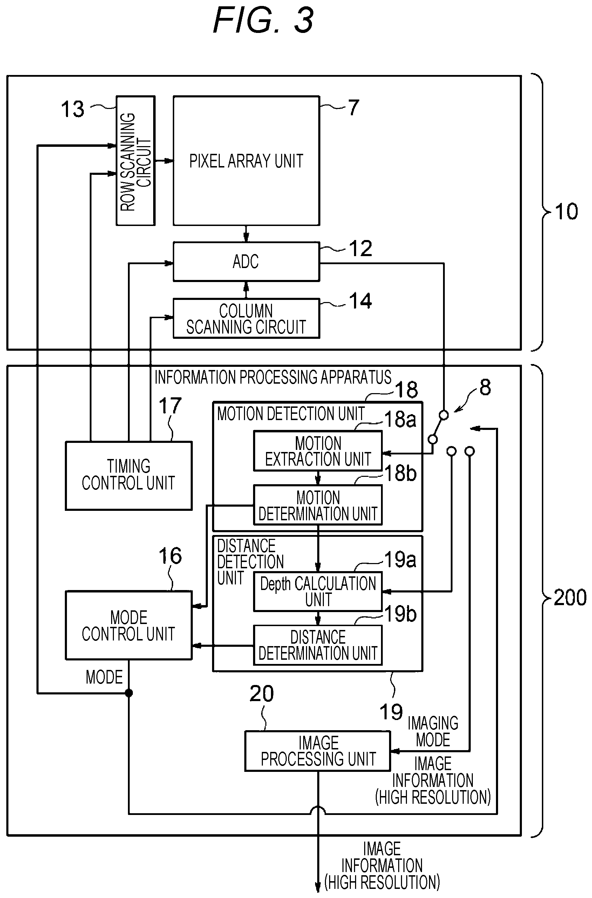

Fig. 3 is a block diagram illustrating configurations of an image sensor 10 and an information processing apparatus 200 in another example of the first embodiment.

In this example, functional blocks corresponding to the sensor control unit 15 in Fig. 2 are constructed in the information processing apparatus 200 outside the image sensor 10. The image sensor 10 includes the pixel array unit 7, the ADC 12, the row scanning circuit 13, and the column scanning circuit 14. Furthermore, similarly to the sensor control unit 15, the information processing apparatus 200 includes a mode control unit 16, a timing control unit 17, a motion detection unit 18, a distance detection unit 19, an image processing unit 20, and a switch 8.

The switch 8 accepts an input of a signal from the ADC 12 in a wired or wireless manner. Furthermore, the row scanning circuit 13, the ADC 12, or the column scanning circuit 14 accepts an input of a signal from the timing control unit 17 in a wired or wireless manner. Furthermore, the row scanning circuit 13 accepts an input of a signal from the mode control unit 16 in a wired or wireless manner.

Hereinafter, operations of the functional blocks included in the image sensor 10 will be described by using the configuration of Fig. 2, but similar operations are performed in the configuration of Fig. 3.

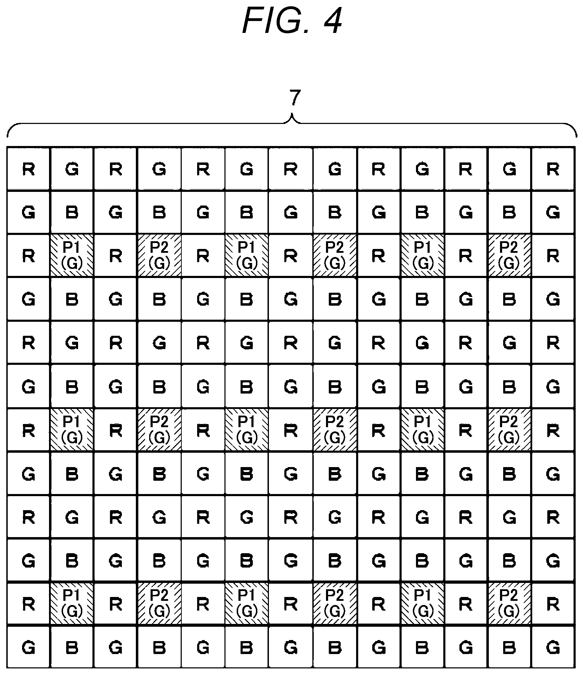

Fig. 4 is a diagram illustrating a structure of the pixel array unit 7 according to the first embodiment.

The pixel array unit 7 includes a plurality of pixels arrayed in a two-dimensional array. Each pixel includes a first phase difference detection pixel P1 and a second phase difference detection pixel P2 which are phase difference detection pixels for performing phase difference detection, in addition to a red (R) pixel, a green (G) pixel, and a blue (B) pixel which are normal pixels. The phase difference detection pixel has a pair of P1 and P2. The phase difference detection pixels P1 and P2 have optical characteristics different from those of normal imaging pixels, and these configurations will be described later.

The normal pixel and the phase difference detection pixel photoelectrically convert light incident through an optical system such as a lens and generate charge information corresponding to the intensity of the light. The pixel array unit 7 performs photoelectric conversion by the normal pixel and the phase difference detection pixel to generate an analog signal, and outputs image information of the generated analog signal to the ADC 12.

The image information of the analog signal generated by the normal pixel is used for detecting the motion of the subject, and the image information of the analog signal generated by the phase difference detection pixel is used for detecting a distance from the image sensor 10 to the subject. In the present embodiment, since the distance detection using the phase difference detection pixel is performed, it is possible to realize low power.

Hereinafter, for the sake of description, the analog signal generated by the normal pixel is also referred to as an image signal, and the analog signal generated by the phase difference detection pixel is also referred to as a phase difference signal.

Hereinafter, a pixel used for detecting the motion of the subject is also referred to as a first pixel, and a pixel used for detecting the distance of the subject is also referred to as a second pixel. Furthermore, the analog signal generated by the first pixel is also referred to as a first pixel signal, and the analog signal generated by the second pixel is also referred to as a second pixel signal. The red (R) pixel, green (G) pixel, and blue (B) pixel, which are the normal pixels, are examples of first pixel, and the first phase difference detection pixel P1 and the second phase difference detection pixel P2, which are the phase difference detection pixels, are examples of the second pixel.

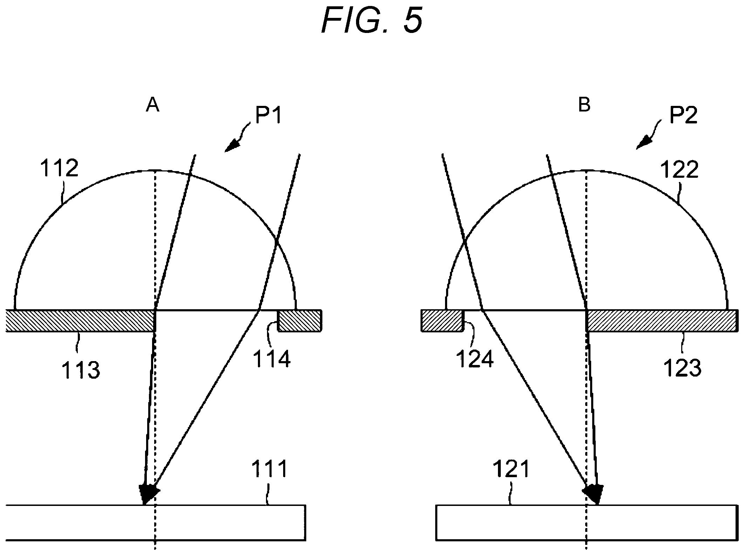

Fig. 5 is a diagram illustrating a configuration of the phase difference detection pixel according to the first embodiment.

Fig. 5A illustrates the first phase difference detection pixel P1, and Fig. 5B illustrates the second phase difference detection pixel P2. The first phase difference detection pixel P1 includes a light receiving element 111. Furthermore. A microlens 112 is provided on a light incident side. Furthermore, a light shielding layer 113 that shields incident light is provided between the light receiving element 111 and the microlens 112 in order to perform pupil division. The light shielding layer 113 has an opening 114 eccentric in one side direction with respect to a center of the light receiving element 111.

Since the first phase difference detection pixel P1 has the above-described configuration, only a part of the incident light is incident on the light receiving element 111 as illustrated in Fig. 5A.

The second phase difference detection pixel includes a light receiving element 121. Furthermore. A microlens 122 is provided on a light incident side. Furthermore, a light shielding layer 123 that shields incident light is provided between the light receiving element 121 and the microlens 122 in order to perform pupil division. The light shielding layer 123 has an opening 24 eccentric in one side direction with respect to a center of the light receiving element.

The light shielding layer 123 is configured to block a side opposite to a direction blocked by the light shielding layer 113 in the first phase difference detection pixel P1. Therefore, the first phase difference detection pixel P1 and the second phase difference detection pixel P2 are configured to shield opposite sides with respect to a distance measuring direction.

Since the second phase difference detection pixel P2 has the above-described configuration, only a part of the incident light is incident on the light receiving element 121 as illustrated in Fig. 5B.

The phase difference detection pixel has the above-described configuration, and so-called image plane phase difference auto focus (AF) can be performed by using the output from the phase difference detection pixel. Note that, the phase difference detection pixel may function only as the phase difference detection pixel and may not function as the normal pixel. Alternatively, one pixel may include two independent light receiving elements, and thus, the one pixel may be a pixel (dual pixel) functioning for imaging and phase difference detection. In such a pixel, the two light receiving elements can independently capture light, and the one pixel detects phase difference signals from the light receiving elements and functions as the phase difference detection pixel at the time of autofocus, and functions as one normal pixel and outputs an image signal at the time of imaging. Furthermore, in addition to the configuration including the normal pixel and the phase difference detection pixel or the configuration including the dual pixel described above, any pixel array unit 7 may be used as long as the pixel array unit 7 can perform phase difference detection in addition to the normal imaging function.

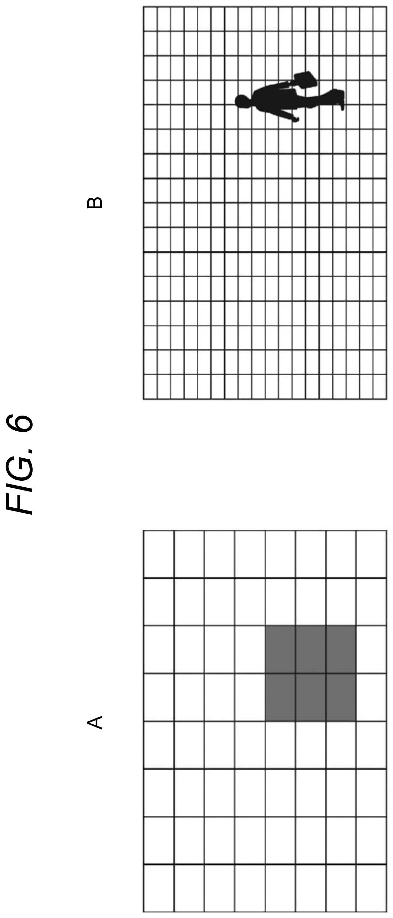

Fig. 6 is a diagram illustrating the resolution of the image information acquired in each mode from the pixel array unit 7 according to the first embodiment.

Fig. 6A is a diagram illustrating the resolution of the image information in the moving object detection mode, and Fig. 6B is a diagram illustrating the resolution of the image information in the imaging mode. Furthermore, in Fig. 6A, a scene in which a black pixel block indicates a pixel block in which the motion of the subject is detected is illustrated, and in Fig. 6B, a scene in which the imaging device 100 performs imaging at the same position in the imaging mode after the motion is detected is illustrated. Fig. 6B illustrates a scene in which the imaging device 100 images a person as the subject, as a result of imaging in the imaging mode, for the pixel block whose motion is detected in the moving object detection mode of Fig. 6A.

In the moving object detection mode, for example, a plurality of pixels (for example, 16 × 16 = 256 pixels, 32 × 32 = 1024 pixels, and the like) in the pixel array unit 7 is set as one pixel block. Furthermore, one pixel block includes a plurality of normal pixels and a plurality of phase difference detection pixels.

Furthermore, in the moving object detection mode, charge information is read for every pixel block and image information is acquired (binning technology). Note that, in the moving object detection mode, charge information of any one pixel in each pixel block may be read from each pixel block to acquire image information (random sampling technology).

The resolution of the image information in the moving object detection mode is, for example, 40 × 30 px, 32 × 20 px, 16 × 5 px, or the like.

In the imaging mode, for example, charge information is read for every pixel in the pixel array unit 7 to acquire image information. The resolution of the image information in the imaging mode corresponds to, for example, full high definition (FHD) (1920 × 1080), high definition (HD) (1280 × 720), or video graphics array (VGA) (640 × 480).

Here, the configuration of the image sensor 10 will be described again with reference to Fig. 2.

The row scanning circuit 13 drives each pixel in the pixel array unit 7, and causes the pixel array unit 7 to acquire the image information of the analog signal. A mode signal indicating which of the two modes a current mode is is input from the mode control unit 16 to the row scanning circuit 13.

In the moving object detection mode, the row scanning circuit 13 controls the pixel array unit 7 to generate image information (that is, low-resolution image information) having a resolution for every pixel block. Furthermore, in the imaging mode, the row scanning circuit 13 controls the pixel array unit 7 to generate image information (that is, high-resolution image information) of a resolution for every pixel.

The ADC 12 converts the image information of the analog signal input from the pixel array unit 7 into image information of a digital signal in synchronization with a clock signal. Then, the ADC 12 outputs the generated image information of the digital signal to the switch 8.

Here, the ADC 12 performs A/D conversion on the low-resolution image information in the moving object detection mode. Furthermore, the ADC 12 performs A/D conversion on the high-resolution image information in the imaging mode.

Therefore, the amount of data that needs to be A/D converted by the ADC 12 is small in the moving object detection mode and large in the imaging mode. Therefore, the power consumption in the ADC 12 is small in the moving object detection mode and large in the imaging mode.

Therefore, the power consumption in the ADC 12 can be reduced as compared with a case where the pixel array unit 7 acquires the high-resolution image information and the ADC 12 performs the A/D conversion on the high-resolution image information at all times.

The column scanning circuit 14 controls the ADC 12 to output the image information of the digital signal to the switch 8.

The sensor control unit 15 integrally controls each unit of the image sensor 10 on the basis of, for example, a program. Note that, a specific processing flow of the sensor control unit 15 (in particular, the mode control unit 16, the motion detection unit 18, and the distance detection unit 19) will be described later.

The timing control unit 17 controls operation timings of the row scanning circuit 13, the ADC 12, and the column scanning timing. A vertical synchronization signal XVS having a predetermined frequency (for example, 30 Hz or the like) is input to the timing control unit 17.

The timing control unit 17 generates a timing signal indicating the operation timing of each of the row scanning circuit 13, the ADC 12, and the column scanning circuit 14 in synchronization with the vertical synchronization signal XVS, and outputs the corresponding timing signal to each unit.

The switch 8 switches an output destination of the image information output from the ADC 12 on the basis of the mode signal input from the mode control unit 16.

In the moving object detection mode, the switch 8 outputs the low-resolution image information generated by the normal pixel from the ADC 12 to the motion detection unit 18. Furthermore, in the moving object detection mode, the switch 8 outputs the low-resolution image information generated by the phase difference detection pixel from the ADC 12 to the distance detection unit 19. Furthermore, in the imaging mode, the switch 8 outputs the high-resolution image information generated by the normal pixel from the ADC 12 to the image processing unit 20.

In the moving object detection mode, the motion detection unit 18 determines whether or not the motion of the subject is detected on the basis of the low-resolution image information generated by the normal pixel, and outputs the determination result to the mode control unit 16.

The motion detection unit 18 includes the motion extraction unit 18a and the motion determination unit 18b. The motion extraction unit 18a extracts the motion of the subject on the basis of the low-resolution image information generated by the normal pixel, and outputs information of the extracted motion to the motion determination unit 18b. The motion determination unit 18b determines whether or not the motion is detected on the basis of the information of the motion, and outputs a determination result to the mode control unit 16. Furthermore, the motion detection unit 18 outputs the determination result to the distance detection unit 19.

In the moving object detection mode, the distance detection unit 19 determines the distance to the subject on the basis of the determination result input from the motion detection unit 18 and the low-resolution image information generated by the phase difference detection pixel, and outputs a determination result to the mode control unit 16.

The distance detection unit 19 includes the depth calculation unit 19a and the distance determination unit 19b. The depth calculation unit 19a calculates depth information corresponding to each of the plurality of pixel blocks on the basis of the low-resolution image information generated by the phase difference detection pixel. Furthermore, the depth calculation unit 19a generates, as a low-resolution depth map, data in which the calculated depth information is arrayed. The distance determination unit 19b determines the distance to the subject on the basis of the low-resolution depth map, and outputs a determination result to the mode control unit 16.

In the imaging mode, the image processing unit 20 may execute various types of image processing such as demosaic processing, white balance processing, and filter processing on the high-resolution image information input from the ADC 12 via the switch 8. Then, the image processing unit 20 outputs the high-resolution image information after the image processing to the storage unit 2 and the display unit 3.

The mode control unit 16 controls the mode transition between the moving object detection mode and the imaging mode on the basis of the result of the motion determination input from the motion detection unit 18 and the result of the distance determination input from the distance detection unit 19. Furthermore, when the mode transitions, the mode control unit 16 outputs a mode signal indicating a mode of a transition destination (indicating a current mode) to the row scanning circuit 13 and the switch 8. Furthermore, the mode control unit 16 switches the switch 8 to the motion detection unit 18 side and the distance detection unit 19 side by the mode signal.

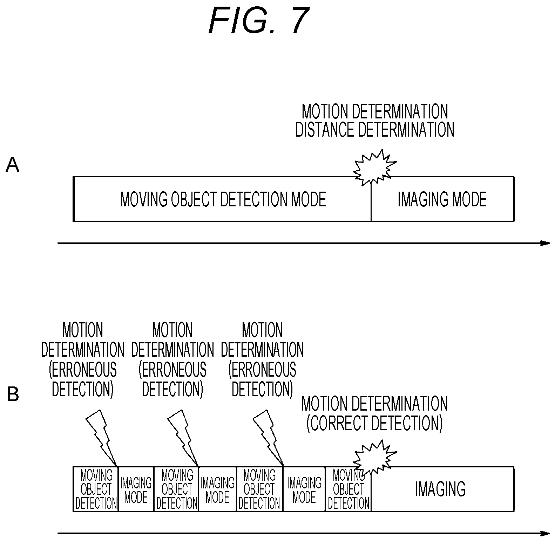

Fig. 7 is a diagram for explaining the mode transition according to the first embodiment and mode transition according to a comparative example.

Fig. 7A is a diagram for explaining a scene of the mode transition according to the first embodiment, and Fig. 7B is a diagram for explaining mode transition according to the comparative example.

As illustrated in Fig. 7A, in the present embodiment, the mode control unit 16 controls the transition of the mode from the moving object detection mode to the imaging mode on the basis of the distance determination result by the distance detection unit 19 in addition to the motion determination result by the motion detection unit 18. For example, the mode control unit 16 causes the mode to transition from the moving object detection mode to the imaging mode in a case where it is determined that the distance between the subject and the image sensor 10 is within a predetermined distance by the distance determination in addition to the detection of the motion. Since the mode control unit 16 causes the mode to transition from the motion detection mode to the imaging mode in a case where both the motion determination and the distance determination are satisfied, it is possible to prevent mode transition in the case of erroneous detection of the motion determination and in a case where the distance to the subject is long, and it is possible to realize low power.

On the other hand, in the comparative example, the mode control unit 16 controls the transition from the moving object detection mode to the imaging mode on the basis of only the result of the motion determination. Therefore, as illustrated in Fig. 7B, in a case where the motion determination is erroneously detected, the mode transitions frequently to the imaging mode, and it is not possible to realize low power.

Here, in the present embodiment, the image sensor 10 is in an activated state regardless of the mode, but the control unit 6, the storage unit 2, the display unit 3, the communication unit 5, and the like (hereinafter, the control unit 6 and the like) are in a sleep state in the moving object detection mode, and are in an activated state only in the imaging mode. Note that, in a case where there is an input from the user via the operation unit 4, the control unit 6 and the like are exceptionally in the activated state regardless of the mode.

The mode control unit 16 activates the control unit 6 and the like from the sleep state when the mode transitions from the moving object detection mode to the imaging mode. Furthermore, at this time, the mode control unit 16 also activates a reference clock generation circuit (not illustrated) that supplies a reference clock to the control unit 6 and the like.

Furthermore, when the mode transitions from the imaging mode to the moving object detection mode, the mode control unit 16 causes the control unit 6 and the like to transition from the activated state to the sleep state. Furthermore, at this time, the mode control unit 16 also stops the reference clock generation circuit (not illustrated) that supplies the reference clock to the control unit 6 and the like.

In the present embodiment, it is possible to realize power saving of the entire imaging device 100 by activating the control unit 6 and the like and the reference clock generation circuit only at a necessary timing (imaging mode).

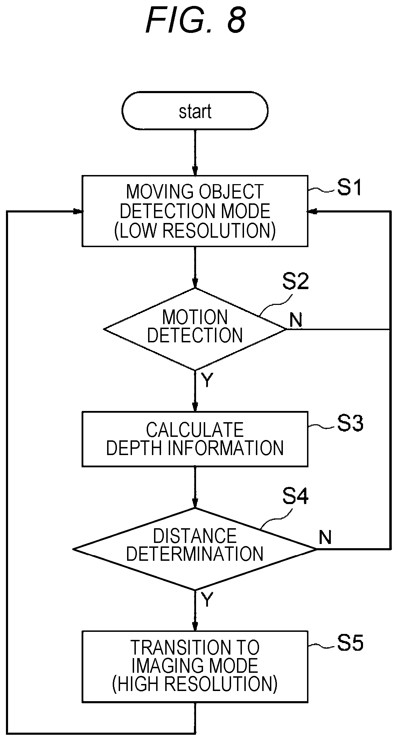

Fig. 8 is an example of a flowchart of the sensor control unit 15 according to the first embodiment.

In step S1, the mode control unit 16 causes the mode to transition to the moving object detection mode. In a case where the current mode is already the moving object detection mode, this step is skipped. In the moving object detection mode, the control unit 6 and the like are in the sleep state and are in a low power state. In step S2, when the low-resolution image information is input on the basis of photoelectric conversion in the normal pixel, the motion extraction unit 18a extracts the motion of the subject from the image information. For example, the motion extraction unit 18a uses charge information (luminance information) for every pixel block in extracting the motion. The motion extraction unit 18a extracts, as the information of the motion, a difference between luminance information for every pixel block in a frame at a reference point in time and luminance information for every pixel block in a frame at a point in time immediately before the reference point in time, and outputs the motion information to the motion determination unit 18b. Furthermore, when the information of the motion is input from the motion extraction unit 18a, the motion determination unit 18b determines whether or not there is the motion of the subject on the basis of the motion information. The motion determination unit 18b outputs a determination result to the mode control unit 16. Hereinafter, the reference point in time is referred to as a first point in time, and the point in time immediately before the reference point in time is also referred to as a second point in time.

For example, the motion determination unit 18b may compare the difference with a predetermined threshold and determine that there is the motion of the subject (motion is detected) in a case where the difference exceeds the threshold. On the other hand, in a case where the difference is equal to or less than the threshold, the motion determination unit 18b may determine that the motion of the subject is not detected.

In a case where the motion determination unit 18b determines that there is the motion of the subject (Yes in step S2), in step S3, the depth calculation unit 19a calculates depth information corresponding to each of the plurality of pixel blocks when the low-resolution image information is input on the basis of photoelectric conversion in the phase difference detection pixel. Furthermore, the depth calculation unit 19a generates, as the low-resolution depth map, data in which the calculated depth information is arrayed. Furthermore, in this example, when the motion determination unit 18b determines that there is the motion of the subject, a determination result is output to the mode control unit 16, and thereafter, the mode control unit 16 outputs the mode signal to switch the switch 8 to the distance detection unit 19 side. Therefore, the depth calculation unit 19a can accept the input of the phase difference signal. In a case where the motion determination unit 18b does not determine that there is the motion of the subject (No in step S2), the processing returns to step S1, and the sleep state is continued in the moving object detection mode.

In step S4, the distance determination unit 19b determines whether or not the distance to the subject is within the predetermined distance on the basis of the low-resolution depth map, and outputs a determination result to the mode control unit 16. The distance determination unit 19b may determine whether or not the distance from the image sensor 10 to the subject is within the predetermined distance by comparing a predetermined threshold with the depth map. For example, in a case where the distance to the subject is equal to or less than the threshold, the distance determination unit 19b determines that the distance to the subject is short.

In a case where the distance from the image sensor 10 to the subject is within the predetermined distance (Yes in step S4), in step S5, the mode control unit 16 causes the mode to transition from the moving object detection mode to the imaging mode. In a case where the distance from the image sensor 10 to the subject is not within the predetermined distance (No in step S4), the processing returns to step S1, and the sleep state is continued in the moving object detection mode.

After transitioning to the imaging mode, the mode control unit 16 causes the mode to transition from the imaging mode to the moving object detection mode under any condition such as in a case where there is no motion of the subject or after a predetermined time elapses. Therefore, the imaging device 100 or the information processing apparatus 200 can reduce power consumption.

In this flowchart, the sensor control unit 15 first performs motion detection with simple calculation, and thereafter, performs depth calculation with complicated calculation in a case where the motion determination unit 18b determines that there is the motion of the subject. The sensor control unit 15 reduces the amount of calculation and realizes power saving by performing the motion detection first and performing the depth calculation later.

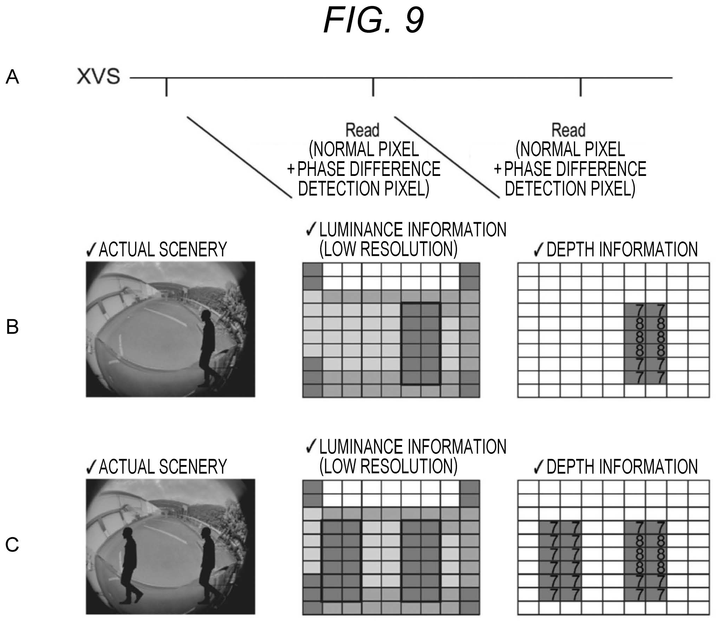

Fig. 9 is a diagram for explaining an example of a method for reading the pixel array unit 7 according to the first embodiment.

Fig. 9A is a diagram for explaining a method for reading the normal pixel and the phase difference detection pixel according to the present embodiment in the moving object detection mode. Fig. 9A illustrates the reading of the normal pixels and the phase difference detection pixels for two frames. In this example, the row scanning circuit 13 drives each normal pixel and each phase difference detection pixel in the pixel array unit 7 on the basis of the vertical synchronization signal XVS. Furthermore, in this example, each normal pixel and each phase difference detection pixel in the pixel array unit 7 are read by a method similar to raster scan in the moving object detection mode.

For example, after the normal pixel is driven by the row scanning circuit 13 and the image signal of each normal pixel is read in one pixel block such as an upper left pixel block, the phase difference detection pixel is driven by the row scanning circuit 13 and the phase difference signal of each phase difference detection pixel in the same pixel block is read. Thereafter, for each pixel block on the same line, each normal pixel and each phase difference detection pixel are read out in similar orders. After the reading of the pixel is completed for each pixel block on the same line, each normal pixel and each phase difference detection pixel are similarly read for each pixel block on a next line (in this example, the pixels are read for each line in order from the top) on the basis of the timing signal. As described above, all the normal pixels and the phase difference detection pixels are read for every line.

Furthermore, as another reading method, in one pixel block, after each phase difference detection pixel is read, each normal pixel may be read. Thereafter, for each pixel block on the same line, each phase difference detection pixel and each normal pixel are read in similar orders. After the reading of the pixel is completed for each pixel block on the same line, each phase difference detection pixel and each normal pixel are similarly read for each pixel block on a next line on the basis of the timing signal. As described above, all the phase difference detection pixels and the normal pixels are read for every line.

Figs. 9B and 9C illustrate an actual scenery, luminance information corresponding to the actual scenery, and a depth map corresponding to the actual scenery. Fig. 9B illustrates an example of a case where there is one moving object detection area (one person is detected as the subject) in which it is determined that there is the motion of the subject, and Fig. 9C illustrates an example of a case where there are two moving object detection areas (two persons are detected as the subject). As described above, whether or not there is the moving object detection area is determined for every pixel block by the motion detection unit 18.

Fig. 9B illustrates an example in which the calculation of the depth information in the depth map is performed only in the moving object detection area. In this example, the depth calculation unit 19a does not calculate the depth information for an unnecessary region other than the moving object detection area. For example, the depth calculation unit 19a calculates the depth information only with one or a plurality of pixel blocks included in the moving object detection area instead of the entire screen. As a result, it is not necessary to calculate the depth information in the unnecessary region, and power saving can be realized.

Fig. 9C illustrates an example in which the calculation of the depth information is performed only in two moving object detection areas. In this example, the depth calculation unit 19a does not calculate the depth information for an unnecessary region other than the two moving object detection areas. Since the depth calculation unit 19a calculates the depth information only with pixel blocks included in the moving object detection areas instead of the entire screen, it is not necessary to calculate the depth information in the unnecessary region, and power saving can be realized. Furthermore, in a case where there is a plurality of moving object detection areas as in this example, the distance detection unit 19 may calculate the depth information only with a pixel block included in a largest area among the plurality of moving object detection areas. The depth calculation unit 19a calculates the depth information only in the pixel block included in the largest area. As a result, it is unnecessary to calculate the depth information in the unnecessary region, and power saving can be realized.

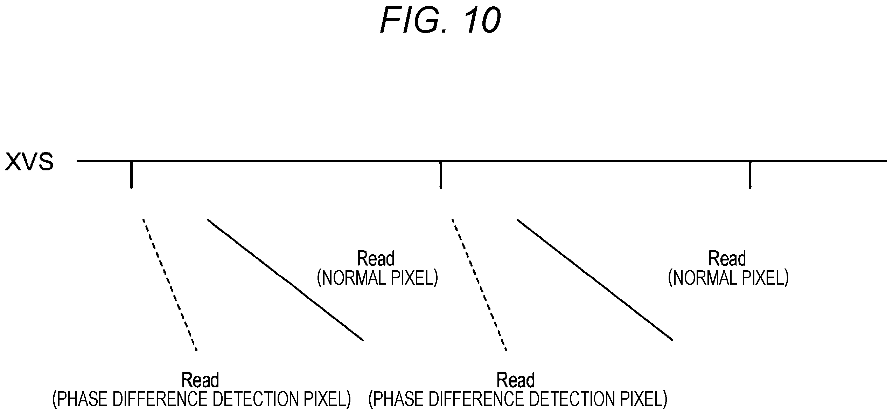

Fig. 10 is a diagram for explaining another example of the method for reading the pixel array unit 7 according to the first embodiment.

Fig. 10 is a diagram for explaining the method for reading the normal pixel and the phase difference detection pixel according to the present embodiment in the moving object detection mode, similarly to Fig. 9A. Fig. 10 illustrates the reading of the normal pixels and the phase difference detection pixels for two frames. In this example, the row scanning circuit 13 also drives each normal pixel and each phase difference detection pixel in the pixel array unit 7 on the basis of the vertical synchronization signal XVS. In this example, in the moving object detection mode, all the phase difference detection pixels out of the normal pixels and the phase difference detection pixels in the pixel array unit 7 are read first.

For example, the phase difference detection pixel is driven by the row scanning circuit 13, and the phase difference signal is read from each phase difference detection pixel in one pixel block such as an upper left pixel block. Thereafter, for each pixel block on the same line, the phase difference signal is similarly read from each phase difference detection pixel. After the reading of the phase difference detection pixels is completed for each pixel block on the same line, the phase difference signal of each phase difference detection pixel is similarly read for each pixel block on a next line on the basis of the timing signal. As described above, the phase difference signals of all the phase difference detection pixels are read for every line.

After the reading of all the phase difference detection pixels is completed, the normal pixel is driven by the row scanning circuit 13, and the image signal of each normal pixel is read in one pixel block such as the upper left pixel block. Thereafter, for each pixel block on the same line, the image signal of each normal pixel is read similarly. After the reading of the normal pixel is completed for each pixel block on the same line, the image signal of each normal pixel is similarly read for each pixel block on a next line on the basis of the timing signal. As described above, the image signals of all the normal pixels are read for every line.

Information read from the phase difference signal is temporarily stored in a volatile memory (not illustrated). Furthermore, similarly, information read from the image signal is also temporarily stored in a volatile memory (not illustrated). Unlike the example of Fig. 9A, since each phase difference signal and each image signal are continuously read, these pieces of information can be collectively stored in a continuous region in the memory.

Furthermore, after these pieces of information are stored in the memory, the depth calculation unit 19a calculates the depth information, and thus, the calculation of the depth information in the unnecessary region can be omitted similarly to the method illustrated in Figs. 9B and 9C.

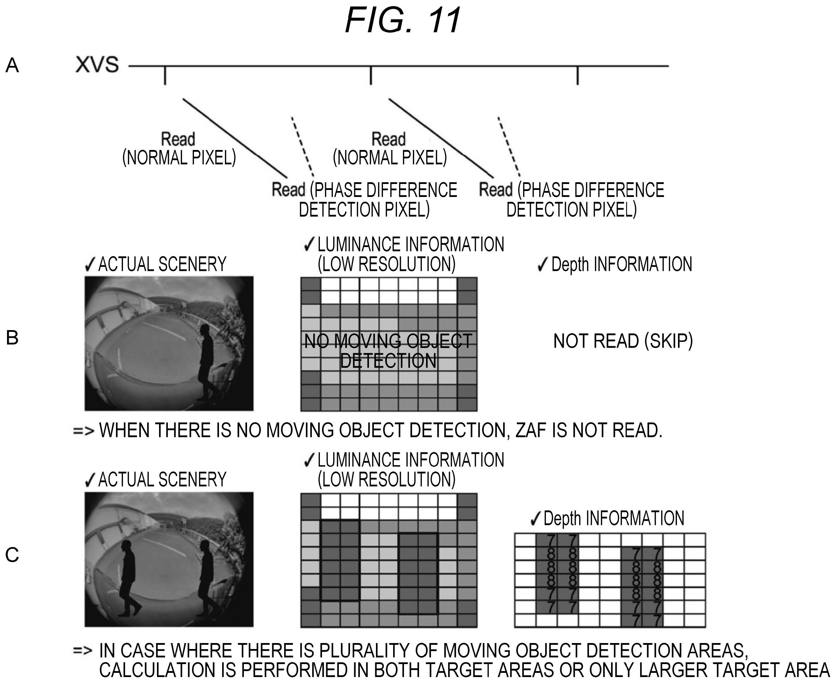

Fig. 11 is a diagram for explaining still another example of the method for reading the pixel array unit 7 according to the first embodiment.

Similarly to Fig. 9A, Fig. 11A is a diagram for explaining the method for reading the normal pixel and the phase difference detection pixel according to the present embodiment in the moving object detection mode. Fig. 11A illustrates the reading of the normal pixels and the phase difference detection pixels for two frames. In this example, the row scanning circuit 13 also drives each normal pixel and each phase difference detection pixel in the pixel array unit 7 on the basis of the vertical synchronization signal XVS. In this example, in the moving object detection mode, the normal pixels out of the normal pixels and the phase difference detection pixels in the pixel array unit 7 are read first.

For example, the normal pixel is driven by the row scanning circuit 13, and the image signal of each normal pixel is read in one pixel block such as an upper left pixel block. Thereafter, for each pixel block on the same line, the image signal of each normal pixel is read similarly. After the reading of the normal pixel is completed for each pixel block on the same line, the image signal of each normal pixel is similarly read for each pixel block on a next line on the basis of the timing signal. As described above, the image signals of all the normal pixels are read for every line.

Furthermore, in this example, after the reading of the image signals of all the normal pixels is completed, the motion detection unit 18 detects the motion.

After the motion is detected, a line of a phase difference detection pixel to be read out is determined on the basis of the moving object detection area. For example, when the phase difference detection pixel is driven, it is conceivable that the row scanning circuit 13 reads the phase difference detection pixel for a line including the moving object detection area and does not read the phase difference signal of the phase difference detection pixel for a line not including the moving object detection area. A length of a broken line in Fig. 11A is shorter than that in Figs. 9A and 10, and indicates that the number of phase difference detection pixels to be read is small.

Since the phase difference signal of the phase difference detection pixel is not read from the unnecessary region other than the moving object detection area, the ADC 12 does not perform AD conversion of the phase difference signal in this line. The ADC 12 can eliminate the need for AD conversion in the unnecessary region, and can realize power saving.

The phase difference detection pixel is driven by the row scanning circuit 13, and the phase difference signal of each phase difference detection pixel is read in one pixel block of the line including the moving object detection area. Thereafter, for each pixel block on the same line, the phase difference signal of each phase difference detection pixel is read similarly. After the reading of the phase difference detection pixel is completed for each pixel block on the same line, the phase difference signal of each phase difference detection pixel is similarly read for each pixel block on a next line in the moving object detection area on the basis of the timing signal. As described above, the phase difference signal of the phase difference detection pixel is read for every line including the moving object detection area. On the other hand, for the line not including the moving object detection area, the phase difference signal of the phase difference detection pixel is not read.

Fig. 11B illustrates an actual scenery and luminance information corresponding to the actual scenery. Fig. 11C illustrates an actual scenery, luminance information corresponding to the actual scenery, and a depth map generated by the phase difference detection pixel. Fig. 11B illustrates an example of a case where the moving object detection area is not included, and Fig. 11C illustrates an example of a case where there are two moving object detection areas (two persons are detected as the subject).

As illustrated in Fig. 11B, in a case where the motion detection unit 18 does not determine that there is the motion of the subject, the row scanning circuit 13 may not drive the phase difference detection pixel thereafter. That is, in this case, the phase difference detection pixel is skipped without being read. Therefore, since the ADC 12 can eliminate the need for AD conversion of all the phase difference signals, power saving can be further realized.

Furthermore, as illustrated in Fig. 11C, an example in which the calculation of the depth information is performed only on a line including at least one of the two moving object detection areas is illustrated. In this example, the ADC 12 does not perform the AD conversion of the phase difference signal for a line other than the line including the two moving object detection areas. Since the depth calculation unit 19a calculates the depth information only on the line including at least one of the two moving object detection areas instead of the entire screen, it is possible to eliminate the need for AD conversion in the unnecessary region, and to realize power saving. Furthermore, in a case where there is a plurality of moving object detection areas as in this example, the depth calculation unit 19a may calculate the depth information only for the line including the largest moving object detection area among the plurality of moving object detection areas. Therefore, it is possible to eliminate the need for AD conversion in the unnecessary region, and to realize power saving.

According to the present embodiment, in addition to the motion determination using the normal pixels, the imaging device 100 or the information processing apparatus 200 calculates the depth information by using the phase difference detection pixel, performs the distance determination, and controls the transition from the moving object detection mode to the imaging mode on the basis of the two determination results. Therefore, it is possible to prevent the mode transition due to erroneous detection of the motion of the subject and the mode transition due to a case where the distance to the subject is long, and it is possible to achieve compatibility between power consumption and detection accuracy.

### (Second Embodiment)

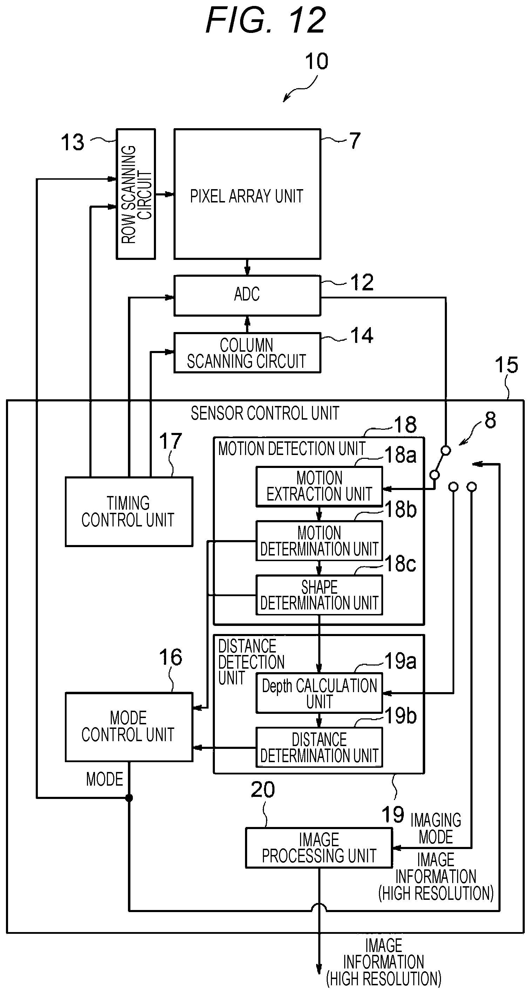

Fig. 12 is a block diagram illustrating a configuration of an image sensor 10 according to a second embodiment.

As illustrated in Fig. 12, the image sensor 10 includes a pixel array unit 7, an ADC 12, a row scanning circuit 13, a column scanning circuit 14, and a sensor control unit 15. The sensor control unit 15 includes a mode control unit 16, a timing control unit 17, a motion detection unit 18, a distance detection unit 19, an image processing unit 20, and a switch 8.

Furthermore, the motion detection unit 18 includes a shape determination unit 18c in addition to a motion extraction unit 18a and a motion determination unit 18b. Furthermore, the distance detection unit 19 includes a depth calculation unit 19a and a distance determination unit 19b.

Here, in the present embodiment, two modes of a moving object detection mode and an imaging mode are prepared. These two modes transition by the control of the mode control unit 16.

In the present embodiment, in the moving object detection mode, in a case where the motion detection unit 18 determines that there is motion of a subject by motion determination, the shape determination unit 18c performs shape determination of a moving object detection area. In the shape determination, the shape determination unit 18c determines whether or not the subject is close to the image sensor 10 on the basis of the size of the moving object detection area, for example. Furthermore, the shape determination unit 18c may determine whether or not the moving object detection area is present in a lower portion of a screen, and determine whether or not the subject is close to the image sensor 10.

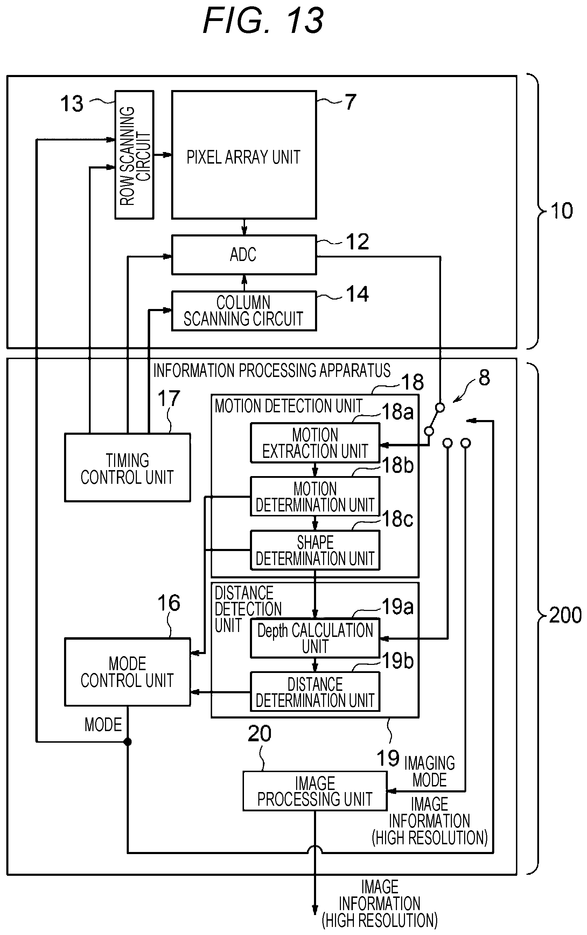

Fig. 13 is a block diagram illustrating configurations of the image sensor 10 and an information processing apparatus 200 in another example of the second embodiment.

In this example, functional blocks corresponding to the sensor control unit 15 in Fig. 12 are constructed in the information processing apparatus 200 outside the image sensor 10. The image sensor 10 includes the pixel array unit 7, the ADC 12, the row scanning circuit 13, and the column scanning circuit 14. Furthermore, similarly to the sensor control unit 15, the information processing apparatus 200 includes a mode control unit 16, a timing control unit 17, a motion detection unit 18, a distance detection unit 19, an image processing unit 20, and a switch 8. The shape determination is performed by the shape determination unit 18c of the information processing apparatus 200.

Hereinafter, operations of the functional blocks included in the image sensor 10 will be described by using the configuration of Fig. 12, but similar operations are performed in the configuration of Fig. 13.

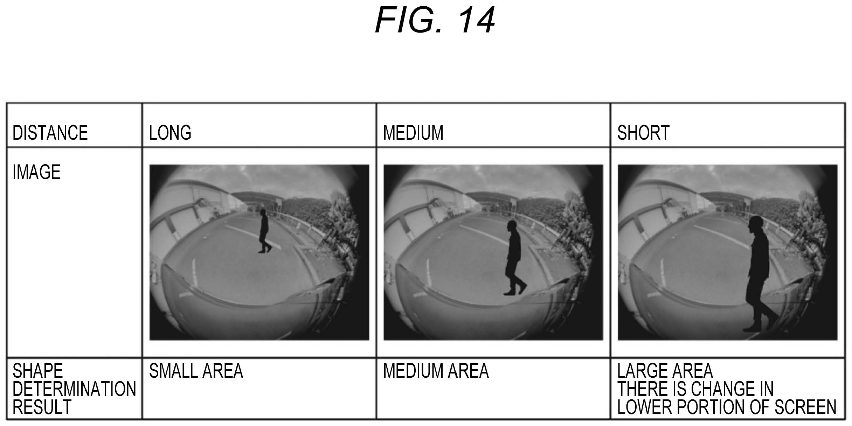

Fig. 14 is an image diagram of a shape determination result according to the second embodiment.

Since the shape determination is performed in the moving object detection mode, the shape determination unit 18c actually performs the shape determination by using a shape of a pixel block. Here, in order to describe an image of the shape determination, an image imaged in the imaging mode will be described. Three image diagrams of Fig. 14 illustrate a scene in which a person is detected as a moving object, and also illustrate an example in which it is determined that the shape of the moving object detection area is a small area, a medium area, and a large area in order from the left. Furthermore, an example in which a distance from the moving object detection area to the image sensor 10 is determined to be long, medium, or short on the basis of the shape determination of the area is illustrated.

The shape determination unit 18c determines the shape of the moving object detection area and determines the distance from the image sensor 10. For example, the shape determination unit 18c may determine the shape and distance of the moving object detection area by comparing a size of the moving object detection area with a predetermined threshold.

Furthermore, in this example, the shape determination unit 18c adds to the shape determination whether or not the moving object detection area is at the lower portion of the screen. For example, the shape and distance of the moving object detection area may be determined by comparing a position of the moving object detection area in the screen with a predetermined threshold.

Furthermore, since the distance to the moving object detection area and the position of the moving object detection area depend on features of a lens and an installation position of the image sensor 10, a determination condition of the shape determination unit 18c may be changed by changing the threshold or the like.

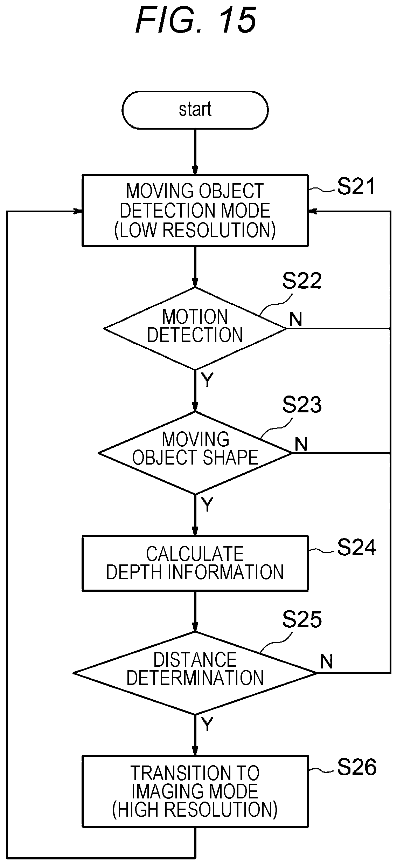

Fig. 15 is an example of a flowchart of the sensor control unit 15 according to the second embodiment.

In step S21, the mode control unit 16 causes the mode to transition to the moving object detection mode. In a case where a current mode is already the moving object detection mode, this step is skipped. In the moving object detection mode, the control unit 6 and the like are in a sleep state and are in a low power state. In step S22, when low-resolution image information is input on the basis of photoelectric conversion in the normal pixel, the motion extraction unit 18a extracts the motion of the subject. Furthermore, when motion information is input from the motion extraction unit 18a, the motion determination unit 18b determines whether or not there is the motion of the subject on the basis of the motion information. The motion determination unit 18b outputs a determination result to the mode control unit 16.

For example, the motion determination unit 18b may compare the difference with a predetermined threshold and determine that there is the motion of the subject in a case where the difference is equal to or larger than the threshold. On the other hand, the motion determination unit 18b may determine that there is no motion of the subject in a case where the difference is less than the threshold.

In a case where the motion determination unit 18b determines that there is the motion of the subject (Yes in step S22), the shape determination unit 18c determines the shape of the moving object detection area in step S23. In this example, as the shape determination, the shape determination unit 18c determines a position of the pixel block in the moving object detection area in the screen in addition to the size of the pixel block included in the moving object detection area. For example, the shape determination unit 18c compares the size of the pixel block included in the moving object detection area with a predetermined threshold, and determines which one of the small area, the medium area, and the large area the size of the moving object detection area belongs to. In a case where it is determined that the moving object detection area is the small area, the shape determination unit 18c determines that the distance to the subject is long. In a case where it is determined that the moving object detection area is the medium area, the shape determination unit 18c determines that the distance to the subject is about medium. Furthermore, in a case where it is determined that the moving object detection area is the large area, the shape determination unit 18c determines that the distance to the subject is short.

Furthermore, the shape determination unit 18c determines whether the position of the moving object detection area is at the lower portion of the screen. For example, a position of a reference pixel block among pixel blocks included in the moving object detection area is compared with a predetermined threshold, and it is determined whether or not the moving object detection area is at the lower portion of the screen. In a case where it is determined that the moving object detection area is at the lower portion of the screen, the shape determination unit 18c determines that the distance to the subject is short. The distance determination using the size of the pixel block included in the moving object detection area and the distance determination using the position of the pixel block in the moving object detection area in the screen may be determined as a logical sum or may be determined as a logical product. In this example, the logical product is used as the determination result. In a case where the size of the moving object detection area is equal to or larger than the predetermined threshold, it is determined as the large area, the position of the moving object detection area in the screen is equal to or smaller than the predetermined threshold, and it is determined that the distance to the subject is short, the shape determination unit 18c determines that the distance to the subject is close to the image sensor 10 as a result of the shape determination.

In a case where the shape determination unit 18c determines that the distance to the subject is close to the image sensor 10 by the shape determination of the subject (Yes in step S23), in step S24, the depth calculation unit 19a calculates the depth information corresponding to each of the plurality of pixel blocks when the phase difference signal is input on the basis of the photoelectric conversion in the phase difference detection pixel. Furthermore, the depth calculation unit 19a generates, as the low-resolution depth map, data in which the calculated depth information is arrayed. Furthermore, in this example, the shape determination unit 18c determines that the distance to the subject is close to the image sensor 10, and thus, a determination result is output to the mode control unit 16. Thereafter, the mode control unit 16 outputs a mode signal and switches the switch 8 to the distance detection unit 19 side. In a case where the shape determination unit 18c does not determine that the distance to the subject is close to the image sensor 10 (No in step S23), the processing returns to step S1, and the control unit 6 and the like continue the sleep state in the moving object detection mode.

In step S25, the distance determination unit 19b determines whether or not the distance to the subject is within a predetermined distance on the basis of the low-resolution depth map, and outputs a determination result to the mode control unit 16. The distance determination unit 19b may determine whether or not the distance to the subject is within a predetermined distance by comparing a predetermined threshold with the depth map. For example, in a case where the distance to the subject is equal to or less than the threshold, the distance determination unit 19b determines that the distance to the subject is short.

In a case where the distance to the subject is within the predetermined distance (Yes in step S25), the mode control unit 16 causes the mode to transition from the moving object detection mode to the imaging mode in step S26. In a case where the distance to the subject is not within the predetermined distance (No in step S25), the processing returns to step S21, and the control unit 6 and the like continue the sleep state in the moving object detection mode.

After transitioning to the imaging mode, the mode control unit 16 causes the mode to transition from the imaging mode to the moving object detection mode under any condition such as in a case where there is no motion of the subject or after a predetermined time elapses. Therefore, the imaging device 100 or the information processing apparatus 200 can reduce power consumption.

In the present embodiment, the reading of the normal pixel and the phase difference detection pixel in the moving object detection mode can be performed by methods similar to the methods in Figs. 9 to 11. That is, the normal pixel and the phase difference detection pixel may be read for every pixel block by a method similar to that in Fig. 9A. Furthermore, the phase difference detection pixel out of the normal pixel and the phase difference detection pixel in the pixel array unit 7 may be read first by a method similar to that in Fig. 10. Furthermore, the normal pixel out of the normal pixel and the phase difference detection pixel in the pixel array unit 7 may be read first by a method similar to that in Fig. 11.

According to the present embodiment, in the moving object detection mode, in addition to the motion determination using the normal pixel, the imaging device 100 or the information processing apparatus 200 performs the shape determination by the normal pixel and the distance determination by the phase difference detection pixel, and controls the transition from the moving object detection mode to the imaging mode on the basis of the three determination results. Therefore, the imaging device 100 or the information processing apparatus 200 can prevent mode transition due to erroneous detection of the motion of the subject or mode transition due to a case where the distance to the subject is long, and can further improve detection accuracy. Furthermore, the imaging device 100 or the information processing apparatus 200 can achieve compatibility between power consumption and detection accuracy.

### (Third Embodiment)

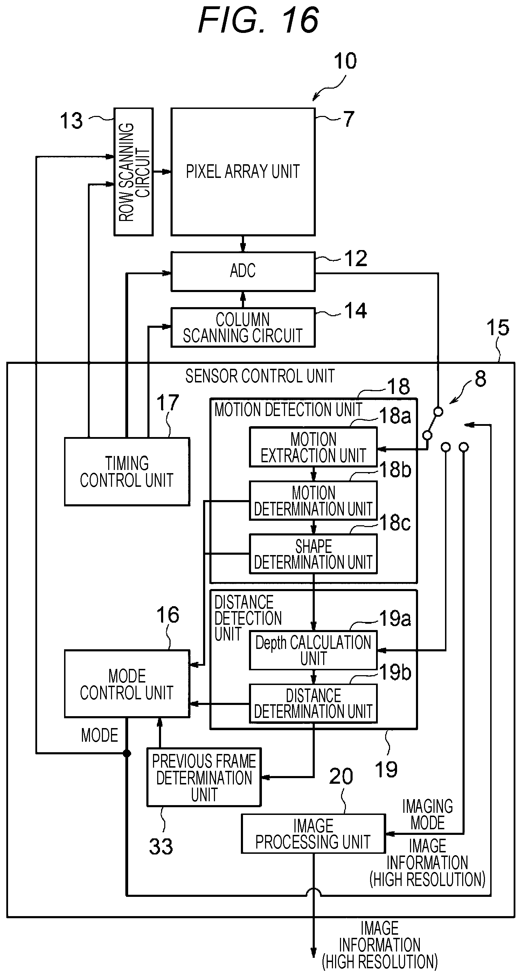

Fig. 16 is a block diagram illustrating a configuration of an image sensor 10 according to a third embodiment.

As illustrated in Fig. 16, the image sensor 10 includes a pixel array unit 7, an ADC 12, a row scanning circuit 13, a column scanning circuit 14, and a sensor control unit 15. The sensor control unit 15 includes a mode control unit 16, a timing control unit 17, a motion detection unit 18, a distance detection unit 19, an image processing unit 20, a switch 8, and a previous frame determination unit 33.

Furthermore, the motion detection unit 18 includes a motion extraction unit 18a, a motion determination unit 18b, and a shape determination unit 18c. Furthermore, the distance detection unit 19 includes a depth calculation unit 19a and a distance determination unit 19b. In this example, as in the second embodiment, an example in which the motion detection unit 18 performs shape determination in addition to motion determination will be described, but the shape determination unit 18c may not be included.

Here, in the present embodiment, two modes of a moving object detection mode and an imaging mode are prepared. These two modes transition by the control of the mode control unit 16.

In the present embodiment, in the moving object detection mode, in addition to a result of motion determination and a result of distance determination of a frame at a reference point in time (also referred to as a current frame), the mode transition is controlled by using a result of motion determination and a result of distance determination of the frame (also referred to as a previous frame) that is one point in time before the reference point in time by the previous frame determination unit 33. In this example, the current frame is determined on the basis of the motion determination result and the shape determination result by the motion detection unit 18 and the distance determination result by the distance detection unit 19, and the previous frame determination unit 33 performs comprehensive determination of the motion determination and the distance determination of a subject by using the result of the motion determination and the result of the distance determination of the previous frame. Similarly to the above configuration, the reference point in time is referred to as a first point in time, and a point in time immediately before the reference point in time is also referred to as a second point in time.

The previous frame determination unit 33 accepts, as an input, the determination result of the previous frame, and performs comprehensive determination by using the determination result of the previous frame in addition to the determination result of the current frame. The previous frame determination unit 33 uses, as the determination result of the previous frame, the motion detection result and the distance detection result. In a case where the motion detection unit 18 determines that there is the motion of the subject in the current frame and the distance detection unit 19 determines that the distance between the image sensor 10 and the subject is short, similarly in the previous frame, in a case where the motion detection unit 18 determines that there is the motion of the subject and the distance detection unit 19 determines that the distance between the image sensor 10 and the subject is short (or the distance to the subject is closer to the image sensor 10 than in the previous frame), the previous frame determination unit 33 also performs comprehensive determination that there is the motion of the subject and the distance to the subject is short. Furthermore, the previous frame determination unit 33 outputs a comprehensive determination result to the mode control unit 16.

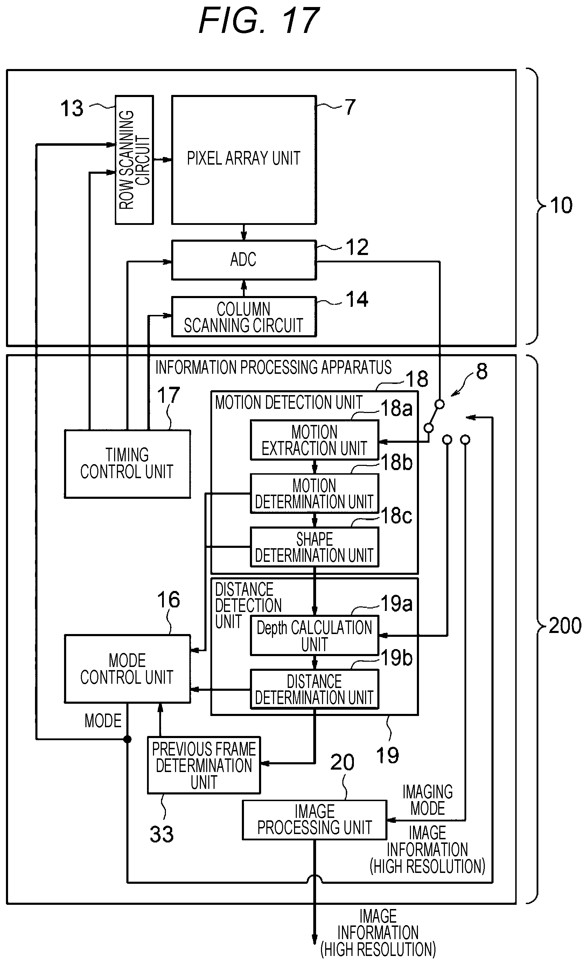

Fig. 17 is a block diagram illustrating configurations of the image sensor 10 and an information processing apparatus 200 in another example of the third embodiment.

In this example, functional blocks corresponding to the sensor control unit 15 in Fig. 16 are constructed in the information processing apparatus 200 outside the image sensor 10. The image sensor 10 includes a pixel array unit 7, an ADC 12, a row scanning circuit 13, and a column scanning circuit 14. Furthermore, similarly to the sensor control unit 15, the information processing apparatus 200 includes a mode control unit 16, a timing control unit 17, a motion detection unit 18, a distance detection unit 19, an image processing unit 20, a switch 8, and a previous frame determination unit 33. The shape determination is performed by a shape determination unit 18c of the information processing apparatus 200.

Hereinafter, operations of the functional blocks included in the image sensor 10 will be described by using the configuration of Fig. 16, but similar operations are performed in the configuration of Fig. 17.

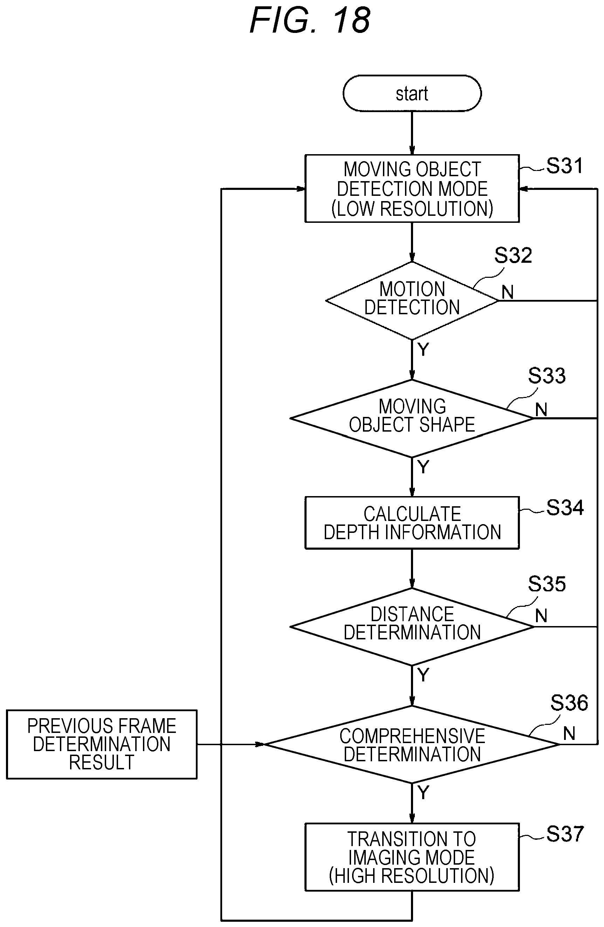

Fig. 18 is an example of a flowchart of the sensor control unit 15 according to the third embodiment.

In step S31, the mode control unit 16 causes the mode to transition to the moving object detection mode. In a case where a current mode is already the moving object detection mode, this step is skipped. In the moving object detection mode, the control unit 6 and the like are in a sleep state and are in a low power state. In step S32, when low-resolution image information is input on the basis of photoelectric conversion in the normal pixel, the motion extraction unit 18a extracts the motion of the subject from the image information. Furthermore, when information of the motion is input from the motion extraction unit 18a, the motion determination unit 18b determines whether or not there is the motion of the subject on the basis of the motion information. The motion determination unit 18b outputs a determination result to the mode control unit 16.

In a case where the motion determination unit 18b determines that there is the motion of the subject (Yes in step S32), the shape determination unit 18c determines a shape of a moving object detection area in step S33. In this example, as the shape determination, the shape determination unit 18c determines a position of a pixel block in the moving object detection area in the screen in addition to a size of the pixel block included in the moving object detection area. For example, the shape determination unit 18c compares the size of the pixel block included in the moving object detection area with a predetermined threshold, and determines which one of a small area, a medium area, and a large area the size of the moving object detection area belongs to. In a case where it is determined that the moving object detection area is the small area, the shape determination unit 18c determines that the distance to the subject is long. In a case where it is determined that the moving object detection area is the medium area, the shape determination unit 18c determines that the distance to the subject is about medium. Furthermore, in a case where it is determined that the moving object detection area is the large area, the shape determination unit 18c determines that the distance to the subject is short.

Furthermore, the shape determination unit 18c determines whether or not the position of the moving object detection area is at the lower portion of the screen. For example, a position of a reference pixel block among the pixel blocks included in the moving object detection area is compared with a predetermined threshold, and it is determined whether or not the moving object detection area is at the lower portion of the screen. In a case where it is determined that the moving object detection area is at the lower portion of the screen, the shape determination unit 18c determines that the distance to the subject is short. The distance determination using the size of the pixel block included in the moving object detection area and the distance determination using the position of the pixel block in the moving object detection area in the screen may be determined as a logical sum or may be determined as a logical product.

In a case where the shape determination unit 18c determines that the distance to the subject is close to the image sensor 10 by the shape determination of the subject (Yes in step S33), in step S34, the depth calculation unit 19a calculates the depth information corresponding to each of the plurality of pixel blocks when the phase difference signal is input on the basis of the photoelectric conversion in the phase difference detection pixel. Furthermore, the depth calculation unit 19a generates, as the low-resolution depth map, data in which the calculated depth information is arrayed. Furthermore, in this example, the shape determination unit 18c determines that the distance to the subject is close to the image sensor 10, a determination result is output to the mode control unit 16, and thereafter, the mode control unit 16 outputs a mode signal and switches the switch 8 to the distance detection unit 19 side. In a case where the shape determination unit 18c does not determine that the distance to the subject is close to the image sensor 10 (No in step S33), the processing returns to step S1, and the control unit 6 and the like continue the sleep state in the moving object detection mode.

In step S35, the distance determination unit 19b determines whether or not the distance to the subject is within a predetermined distance on the basis of the low-resolution depth map, and outputs the determination result to the mode control unit 16. The distance determination unit 19b may determine whether or not the distance to the subject is within the predetermined distance by comparing a predetermined threshold with the depth map. For example, in a case where the distance to the subject is equal to or less than the threshold, the distance determination unit 19b determines that the distance to the subject is short.

In a case where the distance to the subject is within the predetermined distance (Yes in step S35), in step S36, the previous frame determination unit 33 accepts, as an input, the determination result of the previous frame, and performs comprehensive determination by using the determination result of the previous frame in addition to the determination result of the current frame. Furthermore, the previous frame determination unit 33 outputs the determination result to the mode control unit 16. In this example, the previous frame determination unit 33 determines whether or not there is the motion of the subject in the previous frame as in the current frame, and whether or not the distance between the subject and the image sensor 10 is shorter than in the previous frame.

In both the current frame and the previous frame, in a case where there is the motion of the subject and the distance between the subject and the image sensor 10 is shorter in the current frame than in the previous frame (Yes in step S36), the mode control unit 16 causes the mode to transition from the moving object detection mode to the imaging mode in step S37. In the previous frame, in a case where there is no motion of the subject or the distance between the subject and the image sensor 10 is not shorter in the current frame than in the previous frame (No in step S36), the processing returns to step S31, and the control unit 6 and the like continue the sleep state in the moving object detection mode.

In the present embodiment, the reading of the normal pixel and the phase difference detection pixel in the moving object detection mode can be performed by methods similar to the methods in Figs. 9 to 11. That is, the normal pixel and the phase difference detection pixel may be read for every pixel block by the method similar to that in Fig. 9A. Furthermore, the phase difference detection pixel out of the normal pixel and the phase difference detection pixel in the pixel array unit 7 may be read first by the method similar to that in Fig. 10. Furthermore, the normal pixel out of the normal pixel and the phase difference detection pixel in the pixel array unit 7 may be read first by the method similar to that in Fig. 11.

According to the present embodiment, in the moving object detection mode, the imaging device 100 or the information processing apparatus 200 controls the transition from the moving object detection mode to the imaging mode on the basis of the motion determination result and the distance determination result of the previous frame in addition to the motion determination result and the distance determination result of the current frame. Therefore, the imaging device 100 or the information processing apparatus 200 can prevent the mode transition due to erroneous detection of the motion of the subject or the mode transition due to a case where the distance to the subject is long, and can further improve the detection accuracy. Furthermore, the imaging device 100 or the information processing apparatus 200 can achieve compatibility between power consumption and detection accuracy.

### (Fourth Embodiment)

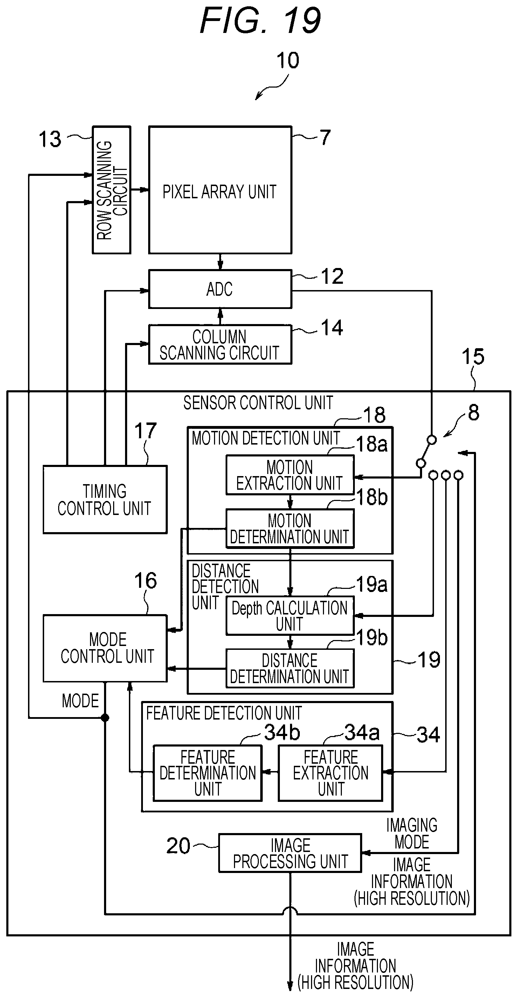

Fig. 19 is a block diagram illustrating a configuration of an image sensor 10 according to a fourth embodiment.

As illustrated in Fig. 19, the image sensor 10 includes a pixel array unit 7, an ADC 12, a row scanning circuit 13, a column scanning circuit 14, and a sensor control unit 15. The sensor control unit 15 includes a mode control unit 16, a timing control unit 17, a motion detection unit 18, a distance detection unit 19, an image processing unit 20, a switch 8, and a feature detection unit 34.

Furthermore, the motion detection unit 18 includes a motion extraction unit 18a, a motion determination unit 18b, and a shape determination unit 18c. Furthermore, the distance detection unit 19 includes a depth calculation unit 19a and a distance determination unit 19b. Furthermore, the feature detection unit 34 includes a feature extraction unit 34a and a feature determination unit 34b.

Here, unlike the first to third embodiments, in the present embodiment, three modes of a moving object detection mode, a feature extraction mode, and an imaging mode are prepared. These three modes transition by the control of the mode control unit 16.

The mode control unit 16 controls the mode transition from the moving object detection mode to the feature detection mode on the basis of a determination result input from the motion detection unit 18 and a determination result input from the distance detection unit 19. Furthermore, the mode control unit 16 controls the mode transition from the feature detection mode to the imaging mode on the basis of a determination result input from the feature detection unit 34.

The feature detection mode is a mode in which image information having a resolution relatively higher than that of the image information used in the moving object detection mode and a resolution relatively lower than that of the image information used in the imaging mode is acquired, and is a mode in which a feature of the subject is detected on the basis of the image information having the resolution. Note that, in the following description, the image information acquired in the feature detection mode is also referred to as medium-resolution image information for the sake of convenience.

A resolution of the image information in the feature detection mode corresponds to, for example, Video Graphics Array (VGA) (640 × 480 px), Quarter VGA (QVGA) (320 × 240 px), Quarter QVGA (QQVGA) (160 × 120 px), and the like.

The feature extraction unit 34a extracts the feature of the subject on the basis of the medium-resolution image information generated by the normal pixel, and outputs extracted feature information to the feature determination unit 34b. The feature determination unit 34b determines whether or not a specific feature is detected on the basis of the feature information, and outputs a determination result to the mode control unit 16. Furthermore, the medium-resolution image information is input from the ADC 12 via the switch 8.

Furthermore, the feature determination unit 34b may compare the extracted feature information with a recognition model by using the recognition model, and determine that the specific feature is detected in a case where the feature information and the recognition model coincide with each other. The recognition model is a model corresponding to a subject (for example, a person, an animal, a car, or the like) assumed as an imaging target. The recognition model may be stored in the feature determination unit 34b in advance.

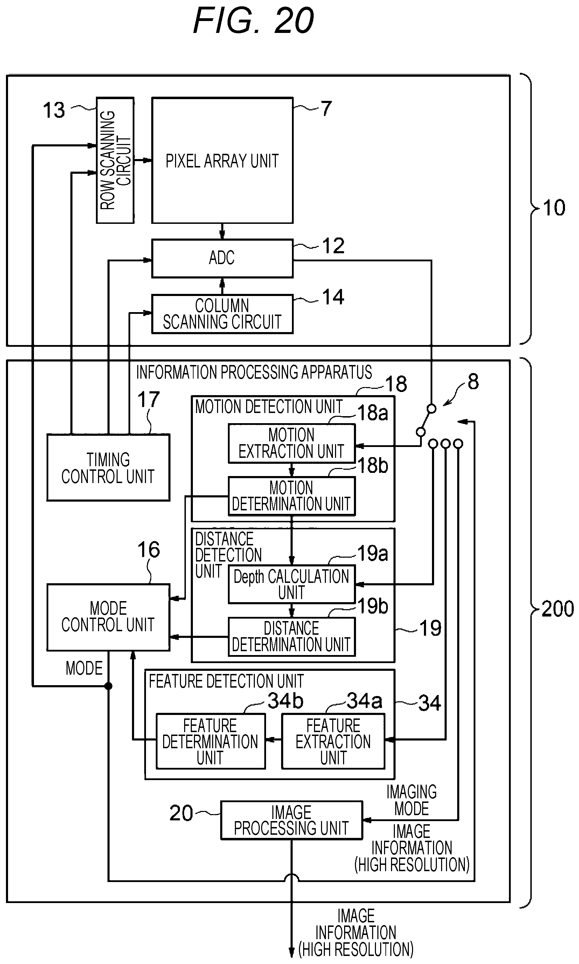

Fig. 20 is a block diagram illustrating configurations of the image sensor 10 and an information processing apparatus 200 in another example of the fourth embodiment.

In this example, functional blocks corresponding to the sensor control unit 15 in Fig. 19 are constructed in the information processing apparatus 200 outside the image sensor 10. The image sensor 10 includes a pixel array unit 7, an ADC 12, a row scanning circuit 13, and a column scanning circuit 14. Furthermore, similarly to the sensor control unit 15, the information processing apparatus 200 includes a mode control unit 16, a timing control unit 17, a motion detection unit 18, a distance detection unit 19, an image processing unit 20, a switch 8, and a feature detection unit 34. Feature detection is performed in the feature detection unit 34 of the information processing apparatus 200.

Hereinafter, operations of the functional blocks included in the image sensor 10 will be described by using the configuration of Fig. 19, but similar operations are performed in the configuration of Fig. 20.

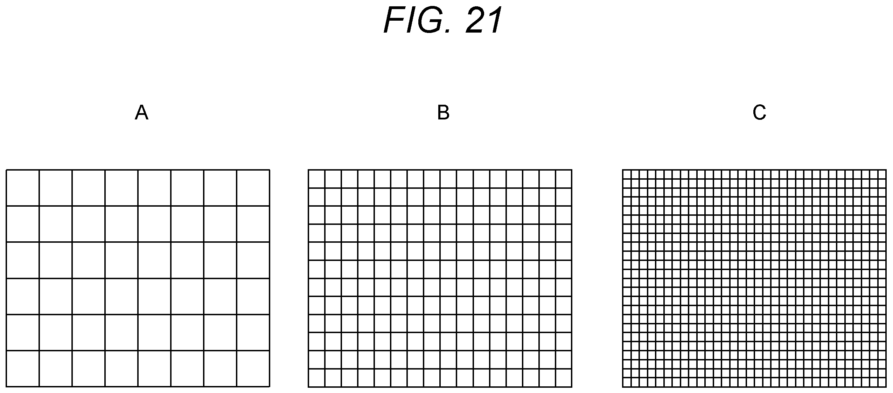

Fig. 21 is a diagram illustrating the resolution of the image information acquired in each mode in the pixel array unit 7 according to the fourth embodiment.

Fig. 21A is a diagram illustrating a resolution of an image acquired in the moving object detection mode, Fig. 21B is a diagram illustrating a resolution of an image acquired in the feature detection mode, and Fig. 21C is a diagram illustrating a resolution of an image acquired in the imaging mode. Since the images in Figs. 21A and 21C are similar to those in Fig. 6, the description thereof will be omitted.

As illustrated in Fig. 21B, similarly to the moving object detection mode, in the feature detection mode, a plurality of pixels (for example, 2 × 2 = 4 pixels, 4 × 4 = 16 pixels, and the like) in the pixel array unit 7 is also set as one pixel block. Furthermore, one pixel block includes a plurality of normal pixels and a plurality of phase difference detection pixels. Note that, the number of pixels included in one pixel block unit in the feature detection mode is set to be smaller than the number of pixels included in a unit of one pixel block in the moving object detection mode.

Then, in the feature detection mode, charge information is read for every pixel block to acquire image information (binning technology). Note that, in the feature detection mode, charge information of any one pixel in each pixel block may be read from each pixel block to acquire image information (random sampling technology).

Here, the ADC 12 performs A/D conversion on the low-resolution image information in the motion detection mode, and performs A/D conversion on the medium-resolution image information in the feature detection mode. Furthermore, the ACD 12 performs A/D conversion on the high-resolution image information in the imaging mode.

Therefore, the amount of data that needs to be A/D converted by the ADC 12 is the smallest in the motion detection mode, the second smallest in the feature detection mode, and the largest in the imaging mode. Therefore, the power consumption in the ADC 12 is the smallest in the motion detection mode, the second smallest in the feature detection mode, and the largest in the imaging mode.

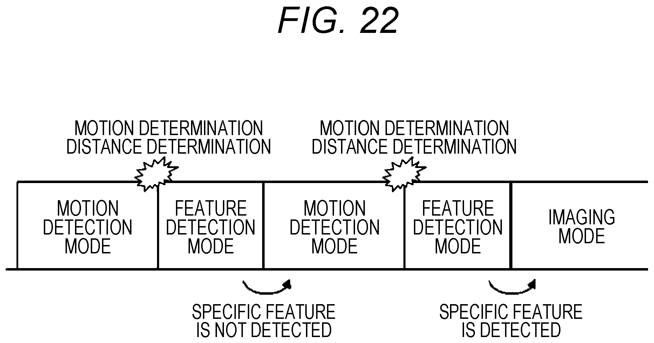

Fig. 22 is a diagram for explaining the mode transition according to the fourth embodiment.

In the present embodiment, the mode control unit 16 controls the transition of the mode from the moving object detection mode to the feature detection mode on the basis of the distance determination result by the distance detection unit 19 in addition to the motion determination result by the motion detection unit 18. For example, in addition to the detection of the motion, the mode control unit 16 causes the mode to transition from the moving object detection mode to the feature extraction mode in a case where the distance between the subject and the image sensor 10 is within a predetermined distance by distance determination. Furthermore, the mode control unit 16 causes the mode to transition from the feature extraction mode to the imaging mode in a case where the specific feature is detected on the basis of the feature information of the subject. Furthermore, in a case where the specific feature is not detected in the feature detection mode, the mode control unit 16 causes the mode to transition from the feature detection mode to the motion detection mode.

In this example, an example in which the mode control unit 16 causes the mode to transition to the feature detection mode on the basis of the motion determination result and the distance determination result in a first motion detection mode and then causes the mode to transition to the motion detection mode since the specific feature is not detected in the feature detection mode is illustrated. In addition, an example in which the mode control unit 16 causes the mode to transition to the feature detection mode on the basis of the motion determination result and the distance determination result in a second motion detection mode and then causes the mode to transition to the imaging mode since the specific feature is detected in the feature detection mode is illustrated.

Note that, the feature extraction unit 34a may extract feature information from the entire image information or may extract feature information from a specific portion in the image information. That is, in the feature detection mode, since a portion where there is already motion in the motion detection is specified, the feature information can be partially extracted from a portion corresponding to the portion where there is the motion. In this case, power consumption in the image sensor 10 can be further reduced.

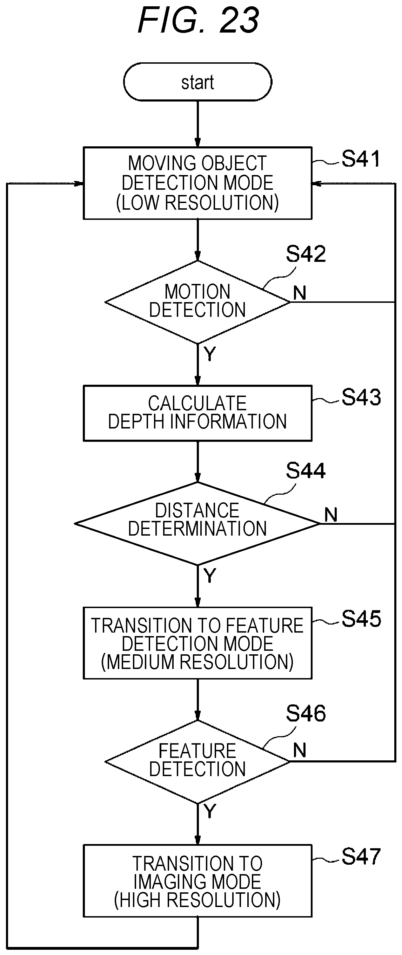

Fig. 23 is an example of a flowchart of the sensor control unit 15 according to the fourth embodiment.

Since a flow from step S41 to step S44 is similar to the flow from step S1 to step S4 described with reference to Fig. 8, the description thereof will be omitted.

In a case where the distance to the subject is within a predetermined distance (Yes in step S44), the mode control unit 16 causes the mode to transition from the moving object detection mode to the feature detection mode in step S45.

In step S46, when the medium-resolution image information is input on the basis of the photoelectric conversion in the normal pixel, the feature extraction unit 34a extracts the feature information from the image information. Furthermore, the feature determination unit 34b compares the extracted feature information with the recognition model by using the recognition model, and determines that the specific feature is detected in a case where the feature information and the recognition model coincide with each other.

In a case where the feature information and the recognition model coincide with each other in step S46 (Yes in step S46), the mode control unit 16 causes the mode to transition from the feature detection mode to the imaging mode in step S47. In a case where the feature information and the recognition model do not coincide with each other in step S46 (No in step S46), the processing returns to step S41, and the control unit 6 and the like continue the sleep state in the moving object detection mode.

After transitioning to the imaging mode, the mode control unit 16 causes the mode to transition from the imaging mode to the moving object detection mode under any condition such as in a case where there is no motion of the subject or after a predetermined time elapses. Therefore, the imaging device 100 or the information processing apparatus 200 can reduce power consumption.

In the present embodiment, the reading of the normal pixel and the phase difference detection pixel in the moving object detection mode can be performed by methods similar to the methods in Figs. 9 to 11. That is, the normal pixel and the phase difference detection pixel may be read for every pixel block by the method similar to that in Fig. 9A. Furthermore, the phase difference detection pixel out of the normal pixel and the phase difference detection pixel in the pixel array unit 7 may be read first by the method similar to that in Fig. 10. Furthermore, the normal pixel out of the normal pixel and the phase difference detection pixel in the pixel array unit 7 may be read first by the method similar to that in Fig. 11.

According to the present embodiment, in the moving object detection mode, the imaging device 100 or the information processing apparatus 200 controls the transition to the feature detection mode on the basis of the motion determination result and the distance determination result. Furthermore, the imaging device 100 or the information processing apparatus 200 controls the transition to the imaging mode on the basis of the feature information. As described above, in the present embodiment, since the imaging device 100 or the information processing apparatus 200 can cause the mode to transition to the imaging mode only when necessary in accordance with the feature information, it is possible to prevent unnecessary transition to the imaging mode due to erroneous detection.

### (Fifth Embodiment)

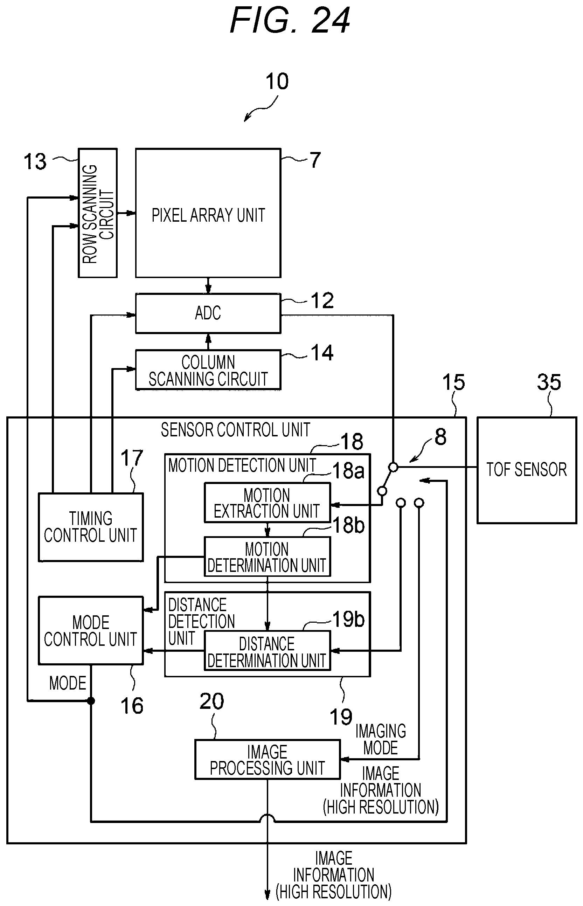

Fig. 24 is a block diagram illustrating configurations of an image sensor 10 and a TOF sensor 35 according to a fifth embodiment.

As illustrated in Fig. 24, the image sensor 10 includes a pixel array unit 7, an ADC 12, a row scanning circuit 13, a column scanning circuit 14, and a sensor control unit 15. The sensor control unit 15 includes a mode control unit 16, a timing control unit 17, a motion detection unit 18, a distance detection unit 19, an image processing unit 20, and a switch 8.

Furthermore, the motion detection unit 18 includes a motion extraction unit 18a and a motion determination unit 18b. Furthermore, the distance detection unit 19 includes a distance determination unit 19b.

In the present embodiment, the pixel array unit 7 does not include phase difference detection pixels, and only normal pixels are arranged in a two-dimensional array. In the present embodiment, depth information is calculated from an analog signal generated in accordance with the amount of light received by a light receiving element which is included in a pixel in the TOF (time of flight) sensor 35 to receive reflected light of light emitted to a subject.

Furthermore, the depth information calculated by the TOF 35 is input to the distance detection unit 19 through the switch 8.

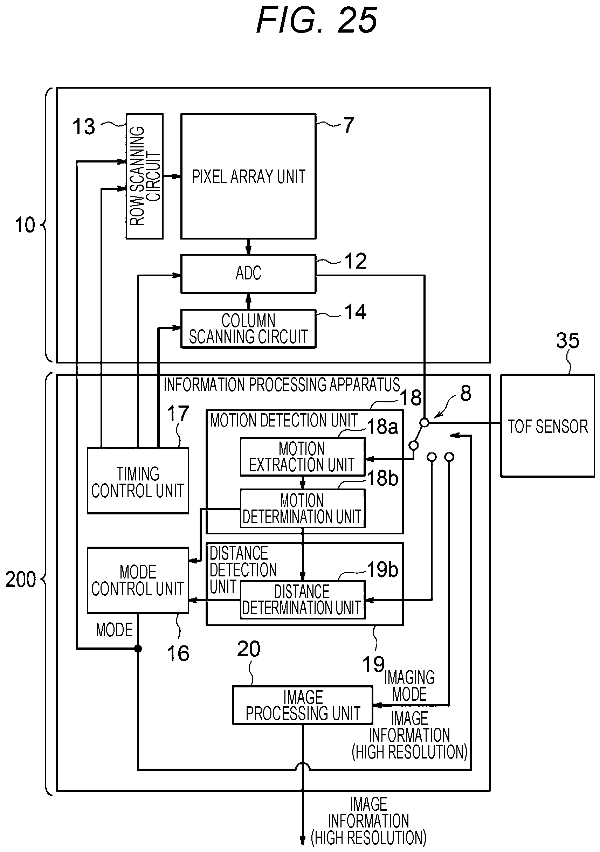

Fig. 25 is a block diagram illustrating configurations of the image sensor 10, an information processing apparatus 200, and the TOF sensor 35 in another example of the fifth embodiment.

In this example, functional blocks corresponding to the sensor control unit 15 in Fig. 24 are constructed in the information processing apparatus 200 outside the image sensor 10. The image sensor 10 includes a pixel array unit 7, an ADC 12, a row scanning circuit 13, and a column scanning circuit 14. Furthermore, similarly to the sensor control unit 15, the information processing apparatus 200 includes a mode control unit 16, a timing control unit 17, a motion detection unit 18, a distance detection unit 19, an image processing unit 20, and a switch 8. The calculation of the depth information is performed by the TOF sensor 35.

Hereinafter, operations of the functional blocks included in the image sensor 10 will be described by using the configuration of Fig. 24, but similar operations are performed in the configuration of Fig. 25.

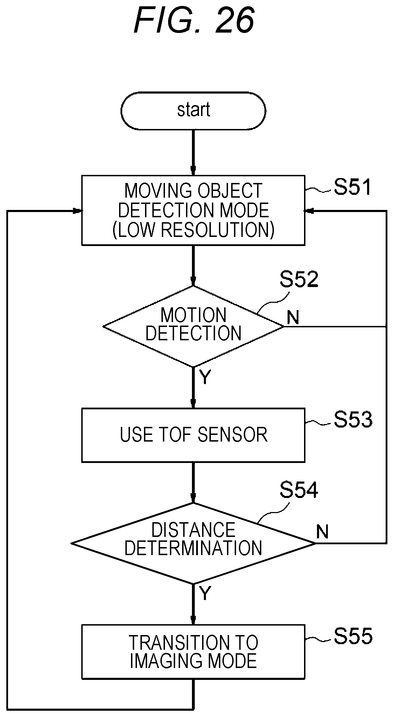

Fig. 26 is an example of a flowchart of the sensor control unit 15 according to the fifth embodiment.

Since a flow from step S51 to step S52 and a flow from step S54 to step S55 are similar to the flow from step S1 to step S2 and the flow from step S4 to step S5 described in Fig. 8, the description thereof will be omitted.

In step S53, the TOF sensor 35 irradiates the subject with light, performs distance measurement on the basis of the reflected light, and calculates the depth information. Furthermore, the TOF sensor 35 inputs the calculated depth information to the sensor control unit 15. The TOF sensor 35 may generate a depth map and input the generated depth map to the sensor control unit 15.

In this example, the pixel included in the TOF sensor 35 is an example of the second pixel. Furthermore, an analog signal generated by the second pixel is an example of the second pixel signal.

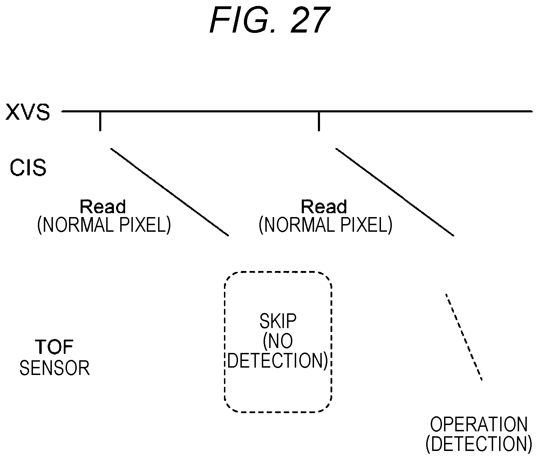

Fig. 27 is a diagram for explaining a method for reading the pixel array unit 7 and an activation timing of the TOF sensor 35 according to the fifth embodiment.

Fig. 27 illustrates the reading of the normal pixels for two frames. In this example, the row scanning circuit 13 drives each normal pixel in the pixel array unit 7 on the basis of the vertical synchronization signal XVS. Furthermore, in this example, each normal pixel in the pixel array unit 7 is read by a method similar to raster scan in the moving object detection mode.

For example, in one pixel block, an image signal of each normal pixel is read, and then, each normal pixel is similarly read for each pixel block on the same line. For each pixel block on the same line, after the pixel reading is completed, each normal pixel is similarly read for each pixel block of the next line on the basis of the timing signal. As described above, all the normal pixels are read for every line.

In this example, the TOF sensor 35 is activated in a case where the motion is detected. For example, in a case where the motion detection unit 18 does not determine that there is the motion of the subject in a first frame and the motion detection unit 18 determines that there is the motion of the subject in a second frame, the TOF sensor 35 is not activated in the first frame but the TOF sensor 35 is activated in the second frame. As described above, the imaging device 100 or the information processing apparatus 200 can realize low power by activating the TOF sensor 35 after it is determined that there is the motion of the subject.

According to the present embodiment, in the moving object detection mode, the imaging device 100 or the information processing apparatus 200 performs distance determination by measuring the distance to the subject by using the TOF sensor 35, and controls the transition from the moving object detection mode to the imaging mode on the basis of two determination results. Therefore, it is possible to prevent the mode transition due to erroneous detection of the motion of the subject and the mode transition due to a case where the distance to the subject is long, and it is possible to improve the detection accuracy.

Furthermore, according to the present embodiment, the imaging device 100 or the information processing apparatus 200 can realize low power by activating the TOF sensor 35 after it is determined that there is the motion of the subject.

### (Sixth Embodiment)

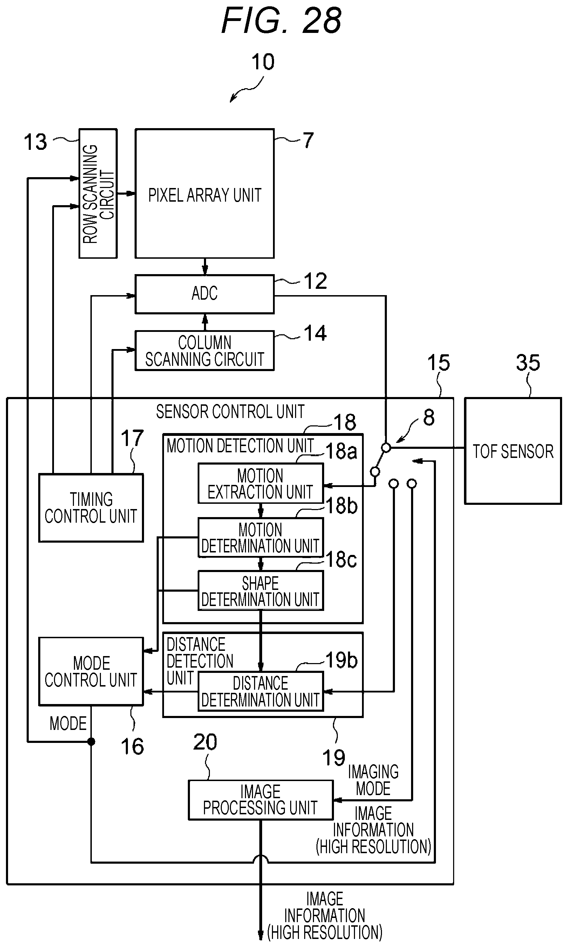

Fig. 28 is a block diagram illustrating configurations of an image sensor 10 and a TOF sensor 35 according to a sixth embodiment.

As illustrated in Fig. 28, the image sensor 10 includes a pixel array unit 7, an ADC 12, a row scanning circuit 13, a column scanning circuit 14, and a sensor control unit 15. The sensor control unit 15 includes a mode control unit 16, a timing control unit 17, a motion detection unit 18, a distance detection unit 19, an image processing unit 20, and a switch 8.

Furthermore, the motion detection unit 18 includes a motion extraction unit 18a, a motion determination unit 18b, and a shape determination unit 18c. Furthermore, the distance detection unit 19 includes a distance determination unit 19b.

In the present embodiment, the pixel array unit 7 does not include phase difference detection pixels, and only normal pixels are arranged in a two-dimensional lattice pattern. In the present embodiment, the calculation of the depth information is performed by the TOF sensor 35.

Furthermore, the depth information calculated by the TOF 35 is input to the distance detection unit 19 through the switch 8.

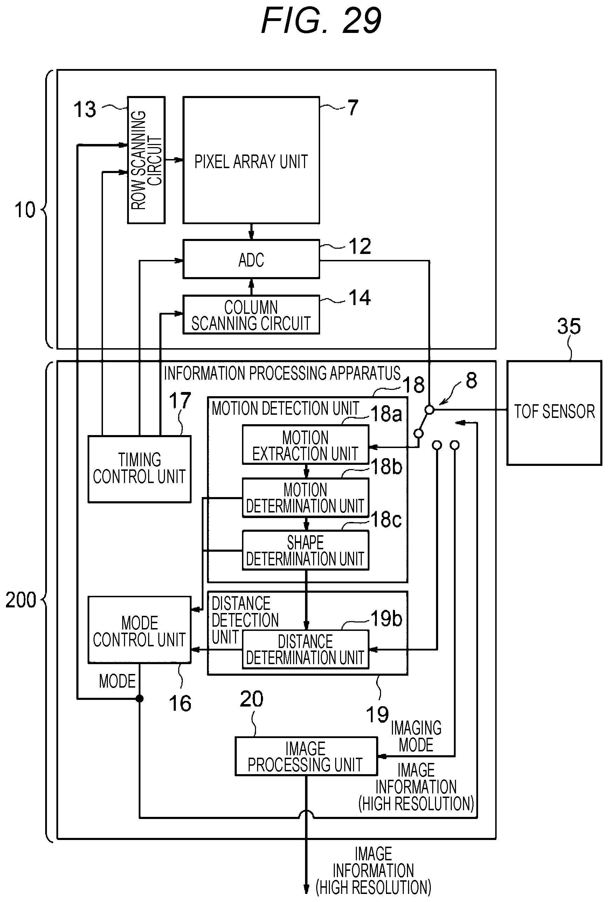

Fig. 29 is a block diagram illustrating configurations of the image sensor 10, an information processing apparatus 200, and the TOF sensor 35 in another example of the sixth embodiment.

In this example, functional blocks corresponding to the sensor control unit 15 in Fig. 24 are constructed in the information processing apparatus 200 outside the image sensor 10. The image sensor 10 includes a pixel array unit 7, an ADC 12, a row scanning circuit 13, and a column scanning circuit 14. Furthermore, similarly to the sensor control unit 15, the information processing apparatus 200 includes a mode control unit 16, a timing control unit 17, a motion detection unit 18, a distance detection unit 19, an image processing unit 20, and a switch 8. The calculation of the depth information is performed by the TOF sensor 35.

Hereinafter, operations of the functional blocks included in the image sensor 10 will be described by using the configuration of Fig. 28, but similar operations are performed in the configuration of Fig. 29.

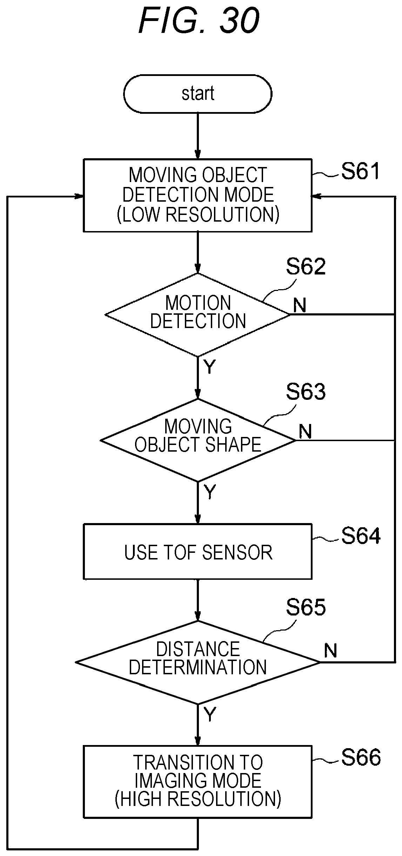

Fig. 30 is an example of a flowchart of the sensor control unit 15 according to the sixth embodiment.

Since a flow from step S61 to step S63 and a flow from step S65 to step S66 are similar to the flow from step S21 to step S23 and the flow from step S25 to step S26 described in Fig. 15, the description thereof will be omitted.

In step S64, the TOF sensor 35 measures a distance to the subject and calculates depth information. Furthermore, the TOF sensor 35 inputs the calculated depth information to the sensor control unit 15. The TOF sensor 35 may generate a depth map and input the generated depth map to the sensor control unit 15.

Furthermore, in the present embodiment, the method for reading the pixel array unit 7 and an activation timing of the TOF sensor 35 can be similar to those in Fig. 27. That is, the imaging device 100 or the information processing apparatus 200 activates the TOF sensor 35 after it is determined that there is the motion of the subject.

According to the present embodiment, in the moving object detection mode, the imaging device 100 or the information processing apparatus 200 performs the distance determination by the TOF sensor 35 in addition to the motion determination and the shape determination, and controls the transition from the moving object detection mode to the imaging mode on the basis of the three determination results. Therefore, the imaging device 100 or the information processing apparatus 200 can prevent the mode transition due to erroneous detection of the motion of the subject or the mode transition due to a case where the distance to the subject is long, and can further improve the detection accuracy.

Furthermore, according to the present embodiment, the imaging device 100 or the information processing apparatus 200 can realize low power by activating the TOF sensor 35 after it is determined that there is the motion of the subject.

### (Seventh Embodiment)

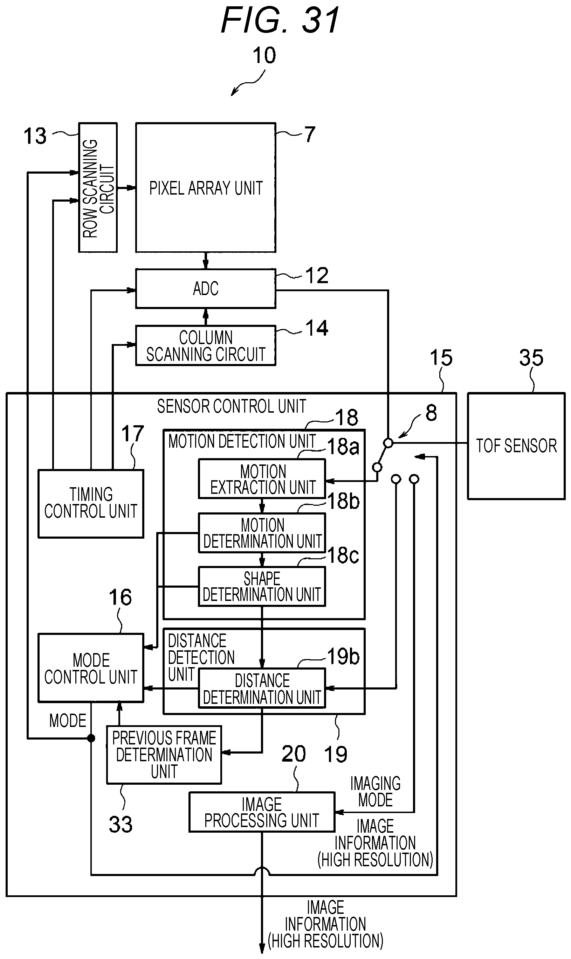

Fig. 31 is a block diagram illustrating configurations of an image sensor 10 and a TOF sensor 35 according to a seventh embodiment.

As illustrated in Fig. 31, the image sensor 10 includes a pixel array unit 7, an ADC 12, a row scanning circuit 13, a column scanning circuit 14, and a sensor control unit 15. The sensor control unit 15 includes a mode control unit 16, a timing control unit 17, a motion detection unit 18, a distance detection unit 19, an image processing unit 20, a switch 8, and a previous frame determination unit 33.

Furthermore, the motion detection unit 18 includes a motion extraction unit 18a, a motion determination unit 18b, and a shape determination unit 18c. Furthermore, the distance detection unit 19 includes a depth calculation unit 19a and a distance determination unit 19b. In this example, as in the second embodiment, an example in which the motion detection unit 18 performs shape determination in addition to motion determination will be described. However, the sensor control unit 15 may not include the shape determination unit 18c.

In the present embodiment, the pixel array unit 7 does not include phase difference detection pixels, and only normal pixels are arranged in a two-dimensional array. In the present embodiment, the calculation of the depth information is performed by the TOF sensor 35.

Furthermore, the depth information calculated by the TOF 35 is input to the distance detection unit 19 through the switch 8.

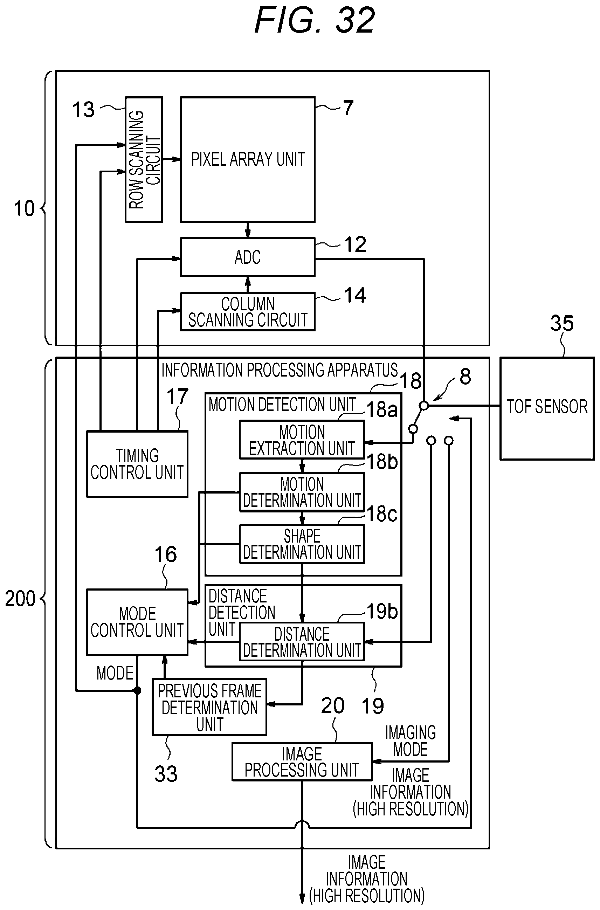

Fig. 32 is a block diagram illustrating configurations of the image sensor 10, an information processing apparatus 200, and the TOF sensor 35 in another example of the seventh embodiment.

In this example, functional blocks corresponding to the sensor control unit 15 in Fig. 31 are constructed in the information processing apparatus 200 outside the image sensor 10. The image sensor 10 includes a pixel array unit 7, an ADC 12, a row scanning circuit 13, and a column scanning circuit 14. Furthermore, similarly to the sensor control unit 15, the information processing apparatus 200 includes a mode control unit 16, a timing control unit 17, a motion detection unit 18, a distance detection unit 19, an image processing unit 20, a switch 8, and a previous frame determination unit 33. The calculation of the depth information is performed by the TOF sensor 35.

Hereinafter, operations of the functional blocks included in the image sensor 10 will be described by using the configuration of Fig. 31, but similar operations are performed in the configuration of Fig. 32.

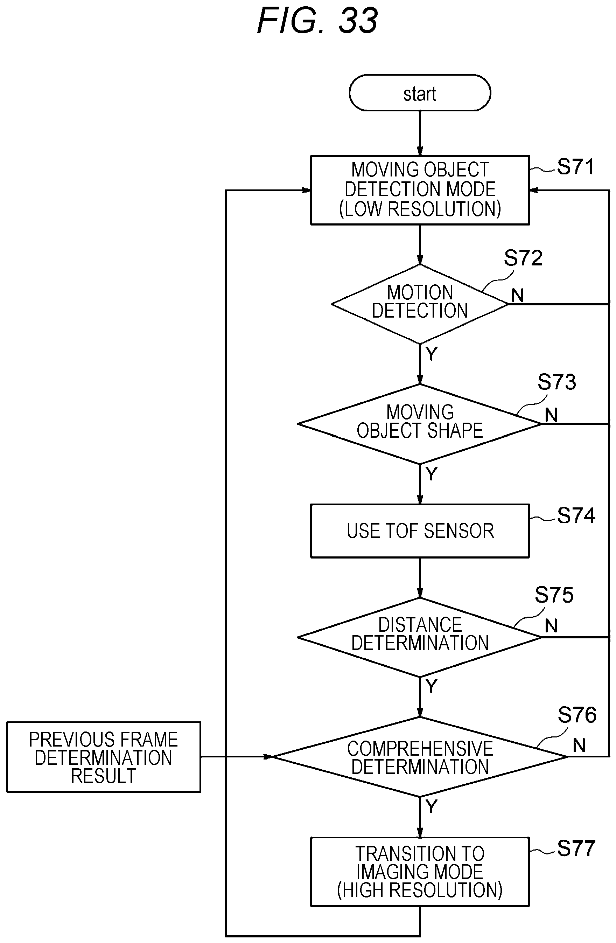

Fig. 33 is an example of a flowchart of the sensor control unit 15 according to the seventh embodiment.

Since a flow from step S71 to step S73 and a flow from step S75 to step S77 are similar to the flow from step S31 to step S33 and the flow from step S35 to step S37 described in Fig. 18, the description thereof will be omitted.

In step S74, the TOF sensor 35 measures a distance to the subject and calculates depth information. Furthermore, the TOF sensor 35 inputs the calculated depth information to the sensor control unit 15. The TOF sensor 35 may generate a depth map and input the generated depth map to the sensor control unit 15.

Furthermore, in the present embodiment, the method for reading the pixel array unit 7 and an activation timing of the TOF sensor 35 can be similar to those in Fig. 27. That is, the imaging device 100 or the information processing apparatus 200 activates the TOF sensor 35 after it is determined that there is the motion of the subject.

In the fifth to seventh embodiments, an example in which the imaging device 100 or the information processing apparatus 200 calculates the depth information by using the TOF sensor 35 has been described. As another example, distance measurement may be performed by a sensor using a monocular method or a structured light method, and the depth information may be calculated. The sensor used in these methods may be provided outside the image sensor 10 similarly to the TOF sensor 35, or may be provided in the image sensor 10.

The imaging device 100 or the information processing apparatus 200 performs distance determination by measuring the distance to the subject by using the monocular method or the structured light method, and controls the transition from the moving object detection mode to the imaging mode on the basis of two determination results. Therefore, it is possible to prevent the mode transition due to erroneous detection of the motion of the subject and the mode transition due to a case where the distance to the subject is long, and it is possible to improve the detection accuracy.

In the sensor using the monocular method, for example, the depth information is calculated by using features of the optical characteristics in one lens. Furthermore, in the sensor using the structured light method, the depth information is calculated on the basis of reflected light of structured light emitted to the subject. The depth information is calculated from an analog signal generated in accordance with the amount of light received by a light receiving element which is included in a pixel in the sensor using the monocular method and the structured light method to receive reflected light of light emitted to the subject. The pixel in the sensor using the monocular method and the structured light method is an example of the second pixel. The analog signal generated by the second pixel is an example of the second pixel signal.

According to the present embodiment, in the moving object detection mode, the imaging device 100 or the information processing apparatus 200 controls the transition from the moving object detection mode to the imaging mode on the basis of the motion determination result and the distance determination result of the previous frame in addition to the motion determination result and the distance determination result of the current frame. Therefore, the imaging device 100 or the information processing apparatus 200 can prevent the mode transition due to erroneous detection of the motion of the subject or the mode transition due to a case where the distance to the subject is long, and can further improve the detection accuracy.

Furthermore, according to the present embodiment, the imaging device 100 or the information processing apparatus 200 can realize low power by activating the TOF sensor 35 after it is determined that there is the motion of the subject.

### (Eighth Embodiment)

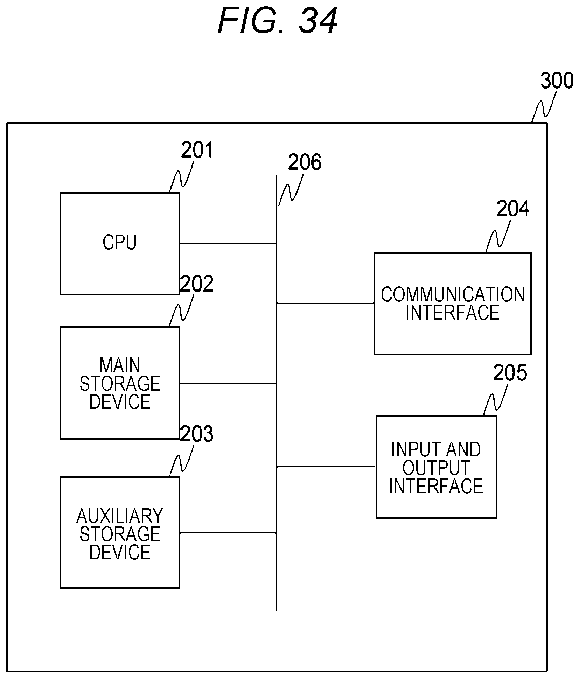

Fig. 34 illustrates an example of a hardware configuration of an information processing apparatus 200 according to an eighth embodiment.

The information processing apparatus 200 according to the present embodiment includes a computer device 300. The computer device 300 includes a central processing unit (CPU) 201, a main storage device 202, an auxiliary storage device 203, a communication interface 204, and an input and output interface 205, which are mutually connected by a bus 206.

Furthermore, the information processing apparatus 200 may be mounted as an apparatus different from the imaging device 100, or may be mounted inside the imaging device 100.

The CPU 201 executes a computer program for realizing each of the above-described functional configurations of the information processing apparatus 200 on the main storage device 202. The CPU 201 executes the computer program to realize the information processing apparatus 200 described in Figs. 3, 13, 17, 20, 25, 29, and 32 (hereinafter, Fig. 3 and the like). This computer program is, for example, an information processing program for the information processing apparatus 200.

The main storage device 202 stores a program for realizing the processing of the present embodiment, data necessary for executing the program, data generated by executing the program, and the like. The program is loaded and executed on the main storage device 202. The main storage device 202 is, for example, a random access memory (RAM), but is not limited thereto.

The auxiliary storage device 203 stores the program, data necessary for executing the program, data generated by executing the program, and the like. These programs and data are read to the main storage device 202 during the processing of the present embodiment. The auxiliary storage device 203 is, for example, a hard disk, an optical disk, a flash memory, or a magnetic tape, but is not limited thereto.

The communication interface 204 is a circuit for performing wired or wireless communication with the image sensor 10 in each mode. For example, the motion detection unit 18, the distance detection unit 19, the feature detection unit 34, or the image processing unit 20 accepts an input of the pixel signal or the phase difference signal from the ADC 12 via the communication interface. Furthermore, the row scanning circuit 13, the ADC 12, or the column scanning circuit 14 accepts an input of the signal from the timing control unit 17 via the communication interface 204. Furthermore, the row scanning circuit 13 accepts an input of the signal from the mode control unit 16 via the communication interface 204.

The input and output interface 205 is a circuit for connection to an input device (not illustrated) such as a keyboard and a microphone and an output device such as a display device (not illustrated) in addition to a mouse.

The bus 206 is a circuit for connecting the CPU 201, the main storage device 202, the auxiliary storage device 203, the communication interface 204, and the input and output interface 205 to each other.

Note that, the above-described program may be installed in the computer device 300 in advance or may be stored in a storage medium such as a CD-ROM. Furthermore, the program may be uploaded on the Internet.

Note that, the computer device 300 may include one or more CPUs 201, one or more main storage devices 202, one or more auxiliary storage devices 203, one or more communication interfaces 204, and one or more input and output interfaces 205.

Furthermore, the information processing apparatus 200 may include a single computer device 300, or may include a system including a plurality of computer devices 300 connected to each other.

According to the present configuration, the functions of the information processing apparatus 200 according to the first to seventh embodiments can be realized by software. Furthermore, although Fig. 34 illustrates an example of the hardware configuration of the information processing apparatus 200 in Fig. 3 and the like, a function of the information processing program can be realized by software with a similar configuration in other embodiments.

### <<1. Configuration Example of Vehicle Control System>>

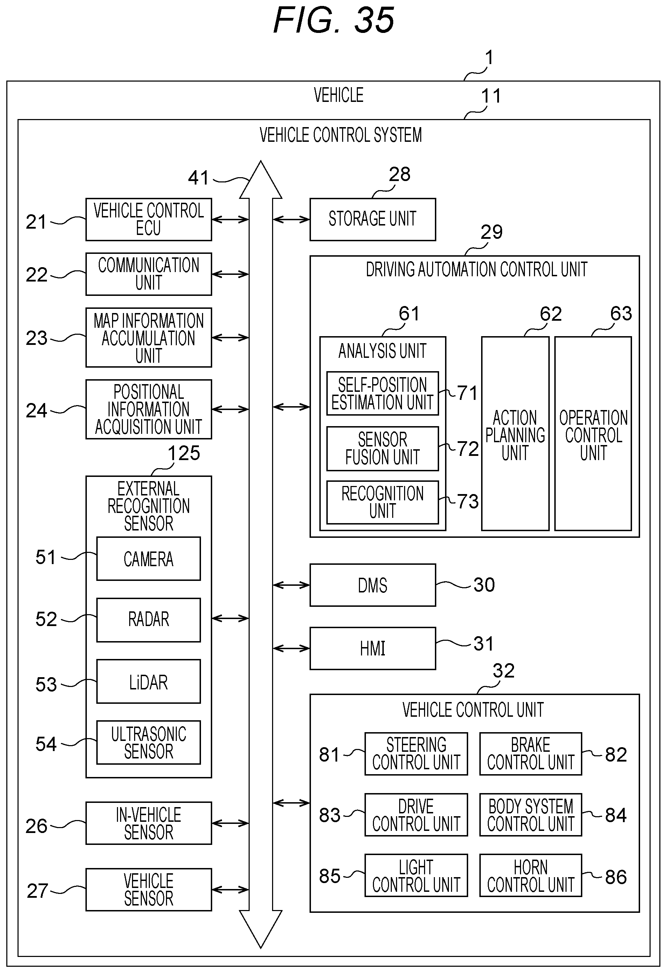

Fig. 35 is a block diagram illustrating a configuration example of a vehicle control system 11 which is an example of a mobile device control system to which the present technology is applied.

The vehicle control system 11 is provided in the vehicle 1 and performs processing related to driving automation of the vehicle 1. This driving automation includes driving automation of levels 1 to 5, and remote driving and remote assistance of the vehicle 1 by a remote driver.

The vehicle control system 11 includes a vehicle control electronic control unit (ECU) 21, a communication unit 22, a map information accumulation unit 23, a positional information acquisition unit 24, an external recognition sensor 25, an in-vehicle sensor 26, a vehicle sensor 27, a storage unit 28, a driving automation control unit 29, a driver monitoring system (DMS) 30, a human machine interface (HMI) 31, and a vehicle control unit 32.

The vehicle control ECU21, the communication unit 22, the map information accumulation unit 23, the positional information acquisition unit 24, the external recognition sensor 25, the in-vehicle sensor 26, the vehicle sensor 27, the storage unit 28, the driving automation control unit 29, the DMS 30, the HMI 31, and the vehicle control unit 32 are connected to be able to communicate with each other via a communication network 41. The communication network 41 includes, for example, an in-vehicle communication network, a bus, or the like conforming to a digital bidirectional communication standard such as a controller area network (CAN), a local interconnect network (LIN), a local area network (LAN), FlexRay (registered trademark), or Ethernet (registered trademark). The communication network 41 may be selectively used depending on a type of data to be transmitted. For example, the CAN may be applied to data related to vehicle control, and the Ethernet may be applied to large-volume data. Note that, each unit of the vehicle control system 11 may be directly connected using wireless communication assuming relatively short-range communication, such as short-range wireless communication (near field communication (NFC)) or Bluetooth (registered trademark), without using the communication network 41, for example.

Note that, hereinafter, in a case where each unit of the vehicle control system 11 performs communication via the communication network 41, the description of the communication network 41 will be omitted. For example, in a case where the vehicle control ECU 21 and the communication unit 22 perform communication via the communication network 41, it will be simply described that the vehicle control ECU 21 and the communication unit 22 perform communication.

The vehicle control ECU 21 includes, for example, various processors such as a central processing unit (CPU) and a micro processing unit (MPU). The vehicle control ECU 21 controls all or some of functions of the vehicle control system 11.

The communication unit 22 communicates with various devices inside and outside of the vehicle, other vehicles, servers, base stations, and the like, and transmits and receives various types of data. At that time, the communication unit 22 can perform communication using a plurality of communication methods.

Communication with the outside of the vehicle executable by the communication unit 22 will be schematically described. The communication unit 22 communicates with a server (hereinafter, referred to as external server) or the like present on an external network via a base station or an access point using a wireless communication method such as fifth generation mobile communication system (5G), long term evolution (LTE), or dedicated short range communications (DSRC), for example. Examples of the external network with which the communication unit 22 performs communication include the Internet, a cloud network, a company-specific network, or the like. A communication method performed by the communication unit 22 on the external network is not particularly limited as long as the method is a wireless communication method that allows digital bidirectional communication at a communication speed equal to or higher than a predetermined speed and over a distance equal to or longer than a predetermined distance.

Furthermore, for example, the communication unit 22 can communicate with a terminal present in the vicinity of a host vehicle using a peer to peer (P2P) technology. Examples of the terminal present in the vicinity of the host vehicle include a terminal attached to a mobile object moving at a relatively low speed such as a pedestrian or a bicycle, a terminal installed with a fixed position in a store or the like, or a machine type communication (MTC) terminal. Moreover, the communication unit 22 can also perform V2X communication. The V2X communication refers to, for example, communication between the host vehicle and other entities, such as vehicle to vehicle communication with another vehicle, vehicle to infrastructure communication with a roadside device or the like, vehicle to home communication, and vehicle to pedestrian communication with a terminal or the like possessed by a pedestrian.

The communication unit 22 can receive a program for updating software that controls an operation of the vehicle control system 11 from the outside (Over The Air), for example. The communication unit 22 can further receive map information, traffic information, information regarding the surroundings of the vehicle 1, and the like from the outside. Furthermore, the communication unit 22 can transmit information regarding the vehicle 1, information regarding the surroundings of the vehicle 1, and the like to the outside, for example. Examples of the information regarding the vehicle 1 transmitted to the outside by the communication unit 22 include data indicating a state of the vehicle 1, a recognition result from a recognition unit 73, and the like. Moreover, for example, the communication unit 22 performs communication corresponding to a vehicle emergency call system such as an eCall.

For example, the communication unit 22 receives an electromagnetic wave transmitted by Vehicle Information and Communication System (VICS) (registered trademark), such as a radio beacon, an optical beacon, or FM multiplex broadcasting.

Communication with the inside of the vehicle executable by the communication unit 22 will be schematically described. The communication unit 22 can communicate with each device in the vehicle using wireless communication, for example. The communication unit 22 can perform wireless communication with a device in the vehicle using a communication method that allows digital bidirectional communication at a communication speed equal to or higher than a predetermined speed by wireless communication, such as wireless LAN, Bluetooth, NFC, or wireless USB (WUSB), for example. The present disclosure is not limited thereto, and the communication unit 22 can also communicate with each device in the vehicle using wired communication. For example, the communication unit 22 can communicate with each device in the vehicle using wired communication via a cable connected to a connection terminal which is not illustrated. The communication unit 22 can communicate with each device in the vehicle using a communication method that allows digital bidirectional communication at a communication speed equal to or higher than a predetermined speed by wired communication, such as a universal serial bus (USB), high-definition multimedia interface (HDMI) (registered trademark), or a mobile high-definition link (MHL), for example.

Here, the device in the vehicle refers to, for example, a device that is not connected to the communication network 41 in the vehicle. For example, a mobile device or a wearable device possessed by a user in the vehicle such as a driver, an information device brought into the vehicle and temporarily installed, or the like is assumed as the device in the vehicle.

The map information accumulation unit 23 accumulates either or both of a map acquired from the outside and a map created by the vehicle 1. For example, the map information accumulation unit 23 accumulates a three-dimensional high-precision map, a global map that is lower in precision but wider in covering area than the high-precision map, and the like.

Examples of the high-precision map include a dynamic map, a point cloud map, a vector map, and the like. The dynamic map is a map including four layers: dynamic information, semidynamic information, semi-static information, and static information, and is provided to the vehicle 1 from the external server or the like, for example. The point cloud map is a map including a point cloud (point cloud data). The vector map is, for example, a map in which traffic information such as a lane and a position of a traffic light is associated with a point cloud map and adapted to driving automation.

The point cloud map and the vector map may be provided from, for example, the external server or the like, or may be created by the vehicle 1 as a map for matching with a local map as described later on the basis of a sensing result from a camera 51, a radar 52, a LiDAR 53, or the like, and may be accumulated in the map information accumulation unit 23. Furthermore, in a case where the high-precision map is provided from the external server or the like, in order to reduce a communication volume, map data covering a several hundred meters square regarding a planned path that the vehicle 1 will follow is acquired from the external server or the like, for example.

The positional information acquisition unit 24 receives a global navigation satellite system (GNSS) signal from a GNSS satellite, and acquires positional information of the vehicle 1. The acquired positional information is supplied to the driving automation control unit 29. Note that, the positional information acquisition unit 24 may acquire the positional information by using a beacon, for example, without being limited to a method by using the GNSS signal.

The external recognition sensor 25 includes various sensors that are used to recognize conditions outside the vehicle 1, and supplies sensor data from each sensor to each unit of the vehicle control system 11. Types and the numbers of the sensors included in the external recognition sensor 25 are optionally determined.

For example, the external recognition sensor 25 includes the camera 51, the radar 52, the light detection and ranging or laser imaging detection and ranging (LiDAR) 53, and an ultrasonic sensor 54. The present disclosure is not limited thereto, the external recognition sensor 25 may include one or more types of sensors of the camera 51, the radar 52, the LiDAR 53, and the ultrasonic sensor 54. The numbers of cameras 51, radars 52, LiDARs 53, and ultrasonic sensors 54 are not particularly limited as long as these devices can be practically installed in the vehicle 1. Furthermore, the types of sensors included in the external recognition sensor 25 are not limited to this example, and the external recognition sensor 25 may include sensors of other types. An example of a sensing region of each sensor included in the external recognition sensor 25 will be described later.

Note that, an imaging method of the camera 51 is not particularly limited. For example, cameras of various imaging methods such as a TOF camera, a stereo camera, a monocular camera, and an infrared camera, which are imaging methods capable of distance measurement, can be applied to the camera 51 as necessary. The present disclosure is not limited thereto, and the camera 51 may be a camera for simply acquiring an imaged image without distance measurement.

Furthermore, for example, the external recognition sensor 25 can include an environment sensor for detecting the environment around the vehicle 1. The environment sensor is a sensor for detecting an environment such as weather, climate, and brightness, and can include, for example, various sensors such as a raindrop sensor, a fog sensor, a sunshine sensor, a snow sensor, and an illuminance sensor.

Moreover, for example, the external recognition sensor 25 includes a microphone used for detecting sounds around the vehicle 1, the position of sound sources, and the like.

The in-vehicle sensor 26 includes various sensors for detecting information regarding the inside of the vehicle, and supplies sensor data from each sensor to each unit of the vehicle control system 11. The type and number of the various sensors included in the in-vehicle sensor 26 are not particularly limited as long as these sensors can be practically installed in the vehicle 1.

For example, the in-vehicle sensor 26 can include one or more types of sensors among a camera, a radar, a seating sensor, a steering wheel sensor, a microphone, and a biometric sensor. As the camera included in the in-vehicle sensor 26, for example, cameras adapted to various imaging methods that allow distance measurement, such as a ToF camera, a stereo camera, a monocular camera, and an infrared camera, can be used. The present disclosure is not limited thereto, and the camera included in the in-vehicle sensor 26 may be a camera for simply acquiring an imaged image without distance measurement. The biometric sensor included in the in-vehicle sensor 26 is provided, for example, on a seat, a steering wheel, or the like, and detects various types of biometric information of the user.

The vehicle sensor 27 includes various sensors for detecting the state of the vehicle 1, and supplies sensor data from each sensor to each unit of the vehicle control system 11. The type and number of the various sensors included in the vehicle sensor 27 are not particularly limited as long as these sensors can be practically installed in the vehicle 1.

For example, the vehicle sensor 27 includes a speed sensor, an acceleration sensor, an angular velocity sensor (gyro sensor), and an inertial measurement unit (IMU) obtained by integrating these sensors. For example, the vehicle sensor 27 includes a steering angle sensor that detects a steering angle of a steering wheel, a yaw rate sensor, an accelerator sensor that detects an operation amount of an accelerator pedal, and a brake sensor that detects an operation amount of a brake pedal. For example, the vehicle sensor 27 includes a rotation sensor that detects the number of rotations of an engine or a motor, an air pressure sensor that detects an air pressure of a tire, a slip rate sensor that detects a slip rate of the tire, and a wheel speed sensor that detects a rotation speed of a wheel. For example, the vehicle sensor 27 includes a battery sensor that detects a battery level and a battery temperature, and an impact sensor that detects external impact.

The storage unit 28 includes at least one of a nonvolatile storage medium or a volatile storage medium, and stores data and a program. The storage unit 28 is used as, for example, an electrically erasable programmable read only memory (EEPROM) and a random access memory (RAM), and a magnetic storage device such as a hard disc drive (HDD), a semiconductor storage device, an optical storage device, and a magneto-optical storage device can be applied as a storage medium. The storage unit 28 stores various programs and data to be used by each unit of the vehicle control system 11. For example, the storage unit 28 includes an event data recorder (EDR) and a data storage system for automated driving (DSSAD), and stores information regarding the vehicle 1 before and after an event such as an accident, and information acquired by the in-vehicle sensor 26.

The driving automation control unit 29 controls a driving automation function of the vehicle 1. For example, the driving automation control unit 29 includes an analysis unit 61, an action planning unit 62, and an operation control unit 63.

The analysis unit 61 performs analysis processing on the vehicle 1 and conditions around the vehicle. The analysis unit 61 includes a self-position estimation unit 71, a sensor fusion unit 72, and the recognition unit 73.

The self-position estimation unit 71 estimates a self-position of the vehicle 1 on the basis of sensor data from the external recognition sensor 25 and the high-precision map accumulated in the map information accumulation unit 23. For example, the self-position estimation unit 71 generates a local map on the basis of sensor data from the external recognition sensor 25, and performs matching between the local map and the high-precision map to estimate the self-position of the vehicle 1. A position of the vehicle 1 is based on, for example, a center of an axle between rear wheels.

Examples of the local map include a three-dimensional high-precision map created by using a technology such as simultaneous localization and mapping (SLAM), an occupancy grid map, and the like. Examples of the three-dimensional high-precision map include the above-described point cloud map and the like. The occupancy grid map is a map in which a three-dimensional or two-dimensional space around the vehicle 1 is divided into grids of a predetermined size, and an occupancy state of an object is indicated in units of grids. The occupancy state of the object is indicated by the presence or absence, or existence probability of the object, for example. The local map is also used for detection processing and recognition processing performed on the conditions outside the vehicle 1 by the recognition unit 73, for example.

Note that, the self-position estimation unit 71 may estimate the self-position of the vehicle 1 on the basis of the positional information acquired by the positional information acquisition unit 24 and the sensor data from the vehicle sensor 27.

The sensor fusion unit 72 performs sensor fusion processing of combining a plurality of different types of sensor data (for example, image data supplied from the camera 51 and sensor data supplied from the radar 52) to obtain information. Methods for combining different types of sensor data include composite, integration, fusion, association, and the like.

The recognition unit 73 performs the detection processing on the conditions outside the vehicle 1 and the recognition processing on the conditions outside the vehicle 1.

For example, the recognition unit 73 performs the detection processing and recognition processing on the conditions outside the vehicle 1 on the basis of information from the external recognition sensor 25, information from the self-position estimation unit 71, information from the sensor fusion unit 72, and the like.

Specifically, for example, the recognition unit 73 performs detection processing, recognition processing, and the like on an object around the vehicle 1. The object detection processing is, for example, processing of detecting the presence or absence, size, shape, position, motion, and the like of an object. The recognition processing of the object is, for example, processing of recognizing an attribute such as a type of the object or identifying a specific object. Note that the detection processing and the recognition processing are not necessarily clearly separated and may overlap.

For example, the recognition unit 73 detects an object around the vehicle 1 by performing clustering to classify point clouds based on sensor data from the radar 52, the LiDAR 53, or the like into clusters of point clouds. Therefore, the presence or absence, the size, the shape, and the position of the object around the vehicle 1 are detected.

For example, the recognition unit 73 detects the motion of the object around the vehicle 1 by performing tracking to follow the motion of the cluster of point clouds classified by clustering. Therefore, a speed and an advancing direction (movement vector) of the object present around the vehicle 1 are detected.

For example, the recognition unit 73 detects or recognizes a vehicle, a person, a bicycle, an obstacle, a structure, a road, a traffic light, a traffic sign, a road marking, and the like, on the basis of image data supplied from the camera 51. Furthermore, the recognition unit 73 may recognize the type of the object around the vehicle 1 by performing recognition processing such as semantic segmentation.

For example, the recognition unit 73 can perform recognition processing on traffic rules around the vehicle 1 on the basis of the map accumulated in the map information accumulation unit 23, the result of estimating the self-position from the self-position estimation unit 71, and the result of recognizing the object around the vehicle 1 from the recognition unit 73. Through this processing, the recognition unit 73 can recognize positions and states of traffic lights, details of traffic signs and road markings, details of traffic regulations, travelable lanes, and the like.

For example, the recognition unit 73 can perform recognition processing on a surrounding environment of the vehicle 1. As the environment around to be recognized by the recognition unit 73, weather, temperature, humidity, brightness, a state of a road surface, and the like are assumed.

The action planning unit 62 creates an action plan of the vehicle 1. For example, the action planning unit 62 creates the action plan by performing processing of path planning and path following.

Note that, the path planning includes global path planning and local path planning. The global path planning includes processing of planning a rough path from the start to the goal. The local path planning, which is also referred to as trajectory planning, includes processing of generating a trajectory capable of safely and smoothly traveling in the vicinity of the vehicle 1 in consideration of the motion characteristics of the vehicle 1 in the planned path.

The path following is processing of planning operations for safe and accurate travelling along the path planned by the path planning within a planned time. For example, the action planning unit 62 can calculate a target speed and a target angular velocity of the vehicle 1, on the basis of the result of the path following processing.

The operation control unit 63 controls operations of the vehicle 1 to achieve the action plan created by the action planning unit 62.

For example, the operation control unit 63 controls a steering control unit 81, a brake control unit 82, and a drive control unit 83 included in the vehicle control unit 32 as described later, and performs lateral vehicle movement control and longitudinal vehicle movement control such that the vehicle 1 travels on the trajectory calculated by the trajectory planning. For example, the operation control unit 63 performs control for the purpose of driver assistance functions such as collision avoidance or impact mitigation, following traveling, vehicle speed maintaining traveling, collision warning of the host vehicle, lane deviation warning of the host vehicle, and driving automation such as traveling without operation of the driver or the remote driver.

The DMS 30 performs authentication processing on a driver, recognition processing on a state of the driver, and the like on the basis of sensor data from the in-vehicle sensor 26, input data input to the HMI 31 as described later, and the like. As the state of the driver to be recognized, for example, a physical condition, an alertness level, a concentration level, a fatigue level, a line-of-sight direction, a drunkenness level, a driving operation, a posture, and the like are assumed.

Note that, the DMS 30 may perform authentication processing of a user other than the driver and recognition processing of the state of the user. Furthermore, for example, the DMS 30 may perform recognition processing on a situation in the vehicle on the basis of the sensor data from the in-vehicle sensor 26. As the situation in the vehicle to be recognized, for example, temperature, humidity, brightness, odor, and the like are assumed.

The HMI 31 inputs various kinds of data, instructions, and the like, and presents various types of data to the user.

The input of data through the HMI 31 will be schematically described. The HMI 31 includes an input device for a person to input data. The HMI 31 generates an input signal on the basis of data, an instruction, or the like that has been input through the input device, and supplies the input signal to each unit of the vehicle control system 11. The HMI 31 includes, for example, an operation element such as a touch panel, a button, a switch, and a lever as the input device. The present disclosure is not limited thereto, and the HMI 31 may further include an input device capable of inputting information by a method such as sound or a gesture other than manual operation. Moreover, the HMI 31 may use, for example, a remote control device using infrared rays or radio waves, or an external connection device such as a mobile device or a wearable device adapted to an operation of the vehicle control system 11, as the input device.

The presentation of data by the HMI 31 will be schematically described. The HMI 31 generates visual information, auditory information, and haptic information for the user or the outside of the vehicle. Furthermore, the HMI 31 performs output control for controlling the output, output content, output timing, output method, and the like of each piece of generated information. The HMI 31 generates and outputs, as the visual information, information indicated by images or light, such as an operation screen, a display of the state of the vehicle 1, a warning display, and a monitor image indicating the conditions around the vehicle 1, for example. Furthermore, the HMI 31 generates and outputs, as the audio information, information indicated by sounds, such as voice guidance, a warning sound, and a warning message, for example. Further, the HMI 31 generates and outputs, as the haptic information, information given to the tactile sense of the user by, for example, force, vibration, motion, or the like.

As an output device from which the HMI 31 outputs the visual information, for example, a display device that presents the visual information by displaying an image by itself or a projector device that presents the visual information by projecting an image can be applied. Note that, the display device may be a device that displays visual information in the field of view of the user, such as a headup display, a transmissive display, or a wearable device having an augmented reality (AR) function, in addition to a display device having a normal display. Furthermore, in the HMI 31, a display device included in a navigation device, an instrument panel, a camera monitoring system (CMS), an electronic mirror, a lamp, or the like provided in the vehicle 1 can also be used as the output device that outputs the visual information.

As an output device from which the HMI 31 outputs the audio information, for example, an audio speaker, headphones, or earphones can be applied.

As an output device from which the HMI 31 outputs the haptic information, for example, a haptics element using a haptics technology can be applied. The haptics element is provided, for example, in a portion with which the user comes in contact, such as a steering wheel or a seat.

The vehicle control unit 32 controls each unit of the vehicle 1. The vehicle control unit 32 includes the steering control unit 81, the brake control unit 82, the drive control unit 83, a body system control unit 84, a light control unit 85, and a horn control unit 86.

The steering control unit 81 performs detection, control, and the like of the state of a steering system of the vehicle 1. The steering system includes, for example, a steering mechanism including a steering wheel and the like, an electric power steering, and the like. The steering control unit 81 includes, for example, a steering ECU that controls the steering system, an actuator that drives the steering system, and the like.

The brake control unit 82 performs detection, control, and the like of the state of a brake system of the vehicle 1. The brake system includes, for example, a brake mechanism including a brake pedal and the like, an antilock brake system (ABS), a regenerative brake mechanism, and the like. The brake control unit 82 includes, for example, a brake ECU that controls the brake system, an actuator that drives the brake system, and the like.

The drive control unit 83 performs detection, control, and the like of the state of a drive system of the vehicle 1. The drive system includes, for example, an accelerator pedal, a driving force generation device for generating a driving force such as an internal combustion engine or a driving motor, a driving force transmission mechanism for transmitting the driving force to wheels, and the like. The drive control unit 83 includes, for example, a drive ECU that controls the drive system, an actuator that drives the drive system, and the like.

The body system control unit 84 performs detection, control, and the like of the state of a body system of the vehicle 1. The body system includes, for example, a keyless entry system, a smart key system, a power window device, a power seat, an HVAC system, an airbag, a seat belt, a shift lever, and the like. The body system control unit 84 includes, for example, a body system ECU that controls the body system, an actuator that drives the body system, and the like.

The light control unit 85 performs detection, control, and the like of the states of various lights of the vehicle 1. Possible examples of the lights to be controlled include a headlight, a backup light, a fog light, a turn signal, a brake light, a projection light, a bumper indicator, and the like. The light control unit 85 includes a light ECU that controls the lights, an actuator that drives the lights, and the like.

The horn control unit 86 performs detection, control, and the like of the state of a car horn of the vehicle 1. The horn control unit 86 includes, for example, a horn ECU that controls the car horn, an actuator that drives the car horn, and the like.

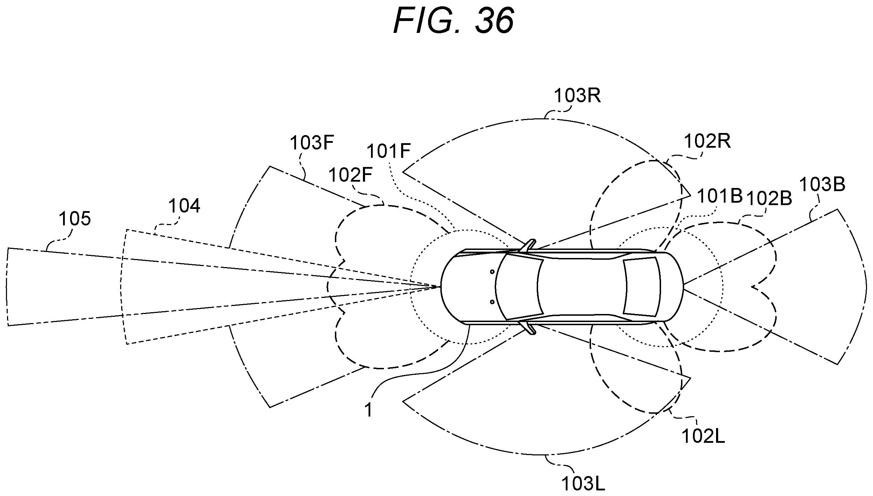

Fig. 36 is a diagram illustrating an example of a sensing region by the camera 51, the radar 52, the LiDAR 53, the ultrasonic sensor 54, and the like of the external recognition sensor 25 in Fig. 35. Note that, Fig. 36 schematically illustrates the vehicle 1 as viewed from above, where a left end side is a front end (front) side of the vehicle 1 and a right end side is a rear end (rear) side of the vehicle 1.

A sensing region 101F and a sensing region 101B indicate examples of the sensing region of the ultrasonic sensor 54. The sensing region 101F covers a region around the front end of the vehicle 1 with a plurality of the ultrasonic sensors 54. The sensing region 101B covers a region around the rear end of the vehicle 1 with a plurality of the ultrasonic sensors 54.

Sensing results in the sensing region 101F and the sensing region 101B are used for parking assistance for the vehicle 1, and the like, for example.

A sensing region 102F to a sensing region 102B indicate examples of the sensing region of the short-range or mid-range radar 52. The sensing region 102F covers a region extending farther than the sensing region 101F in front of the vehicle 1. The sensing region 102B covers a region extending farther than the sensing region 101B behind the vehicle 1. The sensing region 102L covers a region around the rear left side of the vehicle 1. The sensing region 102R covers a region around the rear right side of the vehicle 1.

A sensing result in the sensing region 102F is used for detection of a vehicle, a pedestrian, or the like present in front of the vehicle 1, and the like, for example. A sensing result in the sensing region 102B is used for a rear collision prevention function of the vehicle 1, and the like, for example. Sensing results in the sensing region 102L and the sensing region 102R are used for detection of an object in a blind spot on the sides of the vehicle 1, and the like, for example.

A sensing region 103F to a sensing region 103B indicate examples of the sensing region by the camera 51. The sensing region 103F covers a region extending farther than the sensing region 102F in front of the vehicle 1. The sensing region 103B covers a region extending farther than the sensing region 102B behind the vehicle 1. The sensing region 103L covers a region around the left side of the vehicle 1. The sensing region 103R covers a region around the right side of the vehicle 1.

A sensing result in the sensing region 103F can be used for, for example, recognition of a traffic light or a traffic sign, a lane departure prevention assistance system, and an automated headlight control system. A sensing result in the sensing region 103B can be used for, for example, parking assistance and a surround view system. Sensing results in the sensing region 103L and the sensing region 103R can be used for, for example, the surround view system.

A sensing region 104 indicates an example of the sensing region of the LiDAR 53. The sensing region 104 covers a region extending farther than the sensing region 103F in front of the vehicle 1. On the other hand, the sensing region 104 has a narrower range in a left-right direction than that of the sensing region 103F.

A sensing result in the sensing region 104 is used for, for example, detection of an object such as a vehicle around.

A sensing region 105 indicates an example of the sensing region of the long-range radar 52.

The sensing region 105 covers a region extending farther than the sensing region 104 in front of the vehicle 1. On the other hand, the sensing region 105 has a narrower range in the left-right direction than that of the sensing region 104.

A sensing result in the sensing region 105 is used for, for example, adaptive cruise control (ACC), emergency braking, collision avoidance, or the like.

Note that, the sensing regions of the sensors including the camera 51, the radar 52, the LiDAR 53, and the ultrasonic sensor 54 included in the external recognition sensor 25 may have various configurations other than those illustrated in Fig. 2. Specifically, the ultrasonic sensor 54 may also perform sensing on the sides of the vehicle 1, or the LiDAR 53 may perform sensing on the rear side of the vehicle 1. Furthermore, an installation position of each sensor is not limited to the above-described example. Furthermore, the number of each sensor may be one or more.

Although the present disclosure has been described with reference to the embodiments, the modifications, application examples, and adaptation examples thereof, the present disclosure is not limited to the embodiments and the like described above, and various modifications can be made. Note that, the effects described in the present specification are merely examples. The effects of the present disclosure are not limited to the effects described in the present specification. The present disclosure may have effects other than those described in this specification.

Furthermore, for example, the present disclosure can have the following configurations.
(1) An information processing apparatus including:
   a motion detection unit that performs motion extraction and motion determination of a subject on a basis of a plurality of first pixel signals generated by a plurality of first pixels;
   a distance detection unit that performs distance determination to the subject on a basis of a plurality of second pixel signals generated by a plurality of second pixels; and
   a mode control unit that causes a moving object detection mode in which low-resolution image information is acquired to transition to a feature extraction mode in which medium-resolution image information is acquired or an imaging mode in which high-resolution image information is acquired on a basis of a result of the motion determination and a result of the distance determination.
(2) The information processing apparatus according to (1),
   in which the first pixel is a normal pixel, and
   the second pixel is a phase difference detection pixel.
(3) The information processing apparatus according to (1),
   in which the motion detection unit
   extracts, as information of motion, a difference between luminance information of the plurality of first pixel signals generated in a plurality of pixel blocks including the plurality of first pixels and the plurality of second pixels at a first point in time that is a reference point in time and luminance information of the plurality of first pixel signals generated in a plurality of the pixel blocks at a second point in time that is a point in time one point in time before the reference point in time, and
   performs the motion determination on a basis of the difference.
(4) The information processing apparatus according to (1), in which the distance detection unit calculates depth information of the plurality of second pixel signals generated in a plurality of pixel blocks including the plurality of first pixels and the plurality of second pixels, and performs the distance determination to the subject.
(5) The information processing apparatus according to (1), in which the mode control unit causes the moving object detection mode to transition to the imaging mode in a case where it is determined that there is motion of the subject by the motion determination and it is determined that the distance to the subject determined by the distance determination is within a predetermined distance.
(6) The information processing apparatus according to (1), further including:
   a feature detection unit that performs feature extraction and feature determination of the subject on a basis of the plurality of first pixel signals generated by the plurality of first pixels,
   in which the mode control unit causes the moving object detection mode to transition to the feature extraction mode in a case where it is determined that there is motion of the subject by the motion determination and it is determined that the distance to the subject determined by the distance determination is within a predetermined distance, and
   the mode control unit causes the feature extraction mode to transition to the imaging mode in a case where it is determined that a specific feature is detected from the subject by the feature determination.
(7) The information processing apparatus according to (4), in which the distance detection unit performs the distance determination by using one or the plurality of pixel blocks included in a moving object detection area in which it is determined that there is motion of the subject.
(8) The information processing apparatus according to (7), in which, in a case where there is a plurality of the moving object detection areas, the distance detection unit performs the distance determination by using one or the plurality of pixel blocks included in a largest moving object detection area among the plurality of moving object detection areas.
(9) The information processing apparatus according to (1),
   in which the motion detection unit further determines a shape of a moving object detection area in which it is determined that there is motion of the subject, and
   the distance detection unit performs the distance determination to the subject in accordance with a determination result of the shape.
(10) The information processing apparatus according to (9),
   in which the motion detection unit
   performs the shape determination by comparing a size of the moving object detection area with a threshold, and
   performs the distance determination by comparing a position in a screen of the moving object detection area for which the shape determination is performed with a threshold.
(11) The information processing apparatus according to (10), in which, in a case where the size of the moving object detection area is equal to or larger than the threshold and the position of the moving object detection area in the screen is equal to or smaller than the threshold, the distance detection unit performs the distance determination to the subject.
(12) The information processing apparatus according to (1), further including: a previous frame determination unit that performs comprehensive determination of the motion determination and the distance determination by further using a result of the motion determination and a result of the distance determination at a second point in time that is a point in time one point in time before a reference point in time, in addition to a result of the motion determination and a result of the distance determination at a first point in time that is the reference point in time.
(13) The information processing apparatus according to (1), in which the plurality of second pixel signals is generated on a basis of reflected light of light from the subject received by the plurality of second pixels included in a TOF sensor or a sensor using a monocular ranging method.
(14) An imaging device including:
   a pixel array unit in which a plurality of first pixels and a plurality of second pixels are arrayed in a two-dimensional array;
   a row scanning circuit that drives the plurality of first pixels and the plurality of second pixels to output the plurality of first pixel signals and the plurality of second pixel signals on a basis of a vertical synchronization signal;
   a motion detection unit that performs motion extraction and motion determination of a subject on a basis of the plurality of first pixel signals;
   a distance detection unit that performs distance determination to the subject on a basis of the plurality of second pixel signals; and
   a mode control unit that causes a moving object detection mode in which low-resolution image information is acquired to transition to a feature extraction mode in which medium-resolution image information is acquired or an imaging mode in which high-resolution image information is acquired on a basis of a result of the motion determination and a result of the distance determination.
(15) The imaging device according to (14),
   in which the row scanning circuit
   drives one of the plurality of first pixels or the plurality of second pixels in one pixel block including the plurality of first pixels and the plurality of second pixels to output the plurality of first pixel signals or the plurality of second pixel signals, and
   then drives another of the plurality of first pixels or the plurality of second pixels included in the pixel block to output the plurality of first pixel signals or the plurality of second pixel signals.
(16) The imaging device according to (14),
   in which the row scanning circuit
   drives the plurality of second pixels in the pixel array unit to output the plurality of second pixel signals, and
   then drives the plurality of first pixels in the pixel array unit to output the plurality of first pixel signals.
(17) The imaging device according to (14),
   in which the row scanning circuit
   drives the plurality of first pixels in the pixel array unit to output the plurality of first pixel signals, and
   then drives the plurality of second pixels in the pixel array unit to output the plurality of second pixel signals.
(18) The imaging device according to (17), in which the row scanning circuit drives the plurality of second pixels to output the plurality of second pixel signals in a line including a moving object detection area in which it is determined that there is motion of the subject.
(19) The imaging device according to (17), in which the row scanning circuit skips the driving of the plurality of second pixels in a case where it is not determined that there is the motion of the subject.
(20) A program for causing a computer to execute processing of:
   performing motion extraction and motion determination of a subject on a basis of a plurality of first pixel signals generated by a plurality of first pixels;
   performing distance determination to the subject on a basis of a plurality of second pixel signals generated by a plurality of second pixels; and
   causing a moving object detection mode in which low-resolution image information is acquired to transition to a feature extraction mode in which medium-resolution image information is acquired or an imaging mode in which high-resolution image information is acquired on a basis of a result of the motion determination and a result of the distance determination.

### REFERENCE SIGNS LIST

- 1: Vehicle
- 2: Storage unit
- 3: Display unit
- 4: Operation unit
- 5: Communication unit
- 6: Control unit
- 7: Pixel array unit
- 8: Switch
- 9: Bus
- 10: Image sensor
- 11: Vehicle control system
- 12: ADC
- 13: Row scanning circuit
- 14: Column scanning circuit
- 15: Sensor control unit
- 16: Mode control unit
- 17: Timing control unit
- 18: Motion detection unit
- 18a: motion extraction unit
- 18b: Motion determination unit
- 18c: Shape determination unit
- 19: Distance detection unit
- 19a: Depth calculation unit
- 19b: Distance determination unit
- 20: Image processing unit
- 21: Vehicle control ECU
- 22: Communication unit
- 23: Map information accumulation unit
- 24: Positional information acquisition unit
- 25: External recognition sensor
- 26: In-vehicle sensor
- 27: Vehicle sensor
- 28: Storage unit
- 29: Travel assistance and automated driving control unit
- 30: Driver monitoring system (DMS)
- 31: Human machine interface (HMI)
- 32: Vehicle control unit
- 33: Previous frame determination unit
- 34: Feature detection unit
- 34a: Feature extraction unit
- 34b: Feature determination unit
- 35: TOF sensor
- 41: Communication network
- 51: Camera
- 52: Radar
- 53: LiDAR
- 54: Ultrasonic sensor
- 61: Analysis unit
- 62: Action planning unit
- 63: Operation control unit
- 71: Self-position estimation unit
- 72: Sensor fusion unit
- 73: Recognition unit
- 81: Steering control unit
- 82: Brake control unit
- 83: Drive control unit
- 84: Body system control unit
- 85: Light control unit
- 86: Horn control unit
- 100: Imaging device
- 111: Light receiving element
- 112: Microlens
- 113: Light shielding layer
- 114: Opening
- 121: Light receiving element
- 122: Microlens
- 123: Light shielding layer
- 124: Opening
- 200: Information processing apparatus
- 300: Computer device

## Claims

1. An information processing apparatus comprising:
a motion detection unit that performs motion extraction and motion determination of a subject on a basis of a plurality of first pixel signals generated by a plurality of first pixels;
a distance detection unit that performs distance determination to the subject on a basis of a plurality of second pixel signals generated by a plurality of second pixels; and
a mode control unit that causes a moving object detection mode in which low-resolution image information is acquired to transition to a feature extraction mode in which medium-resolution image information is acquired or an imaging mode in which high-resolution image information is acquired on a basis of a result of the motion determination and a result of the distance determination.

2. The information processing apparatus according to claim 1,
wherein the first pixel is a normal pixel, and
the second pixel is a phase difference detection pixel.

3. The information processing apparatus according to claim 1,
wherein the motion detection unit
extracts, as information of motion, a difference between luminance information of the plurality of first pixel signals generated in a plurality of pixel blocks including the plurality of first pixels and the plurality of second pixels at a first point in time that is a reference point in time and luminance information of the plurality of first pixel signals generated in a plurality of the pixel blocks at a second point in time that is a point in time one point in time before the reference point in time, and
performs the motion determination on a basis of the difference.

4. The information processing apparatus according to claim 1, wherein the distance detection unit calculates depth information of the plurality of second pixel signals generated in a plurality of pixel blocks including the plurality of first pixels and the plurality of second pixels, and performs the distance determination to the subject.

5. The information processing apparatus according to claim 1, wherein the mode control unit causes the moving object detection mode to transition to the imaging mode in a case where it is determined that there is motion of the subject by the motion determination and it is determined that the distance to the subject determined by the distance determination is within a predetermined distance.

6. The information processing apparatus according to claim 1, further comprising:
a feature detection unit that performs feature extraction and feature determination of the subject on a basis of the plurality of first pixel signals generated by the plurality of first pixels,
wherein the mode control unit causes the moving object detection mode to transition to the feature extraction mode in a case where it is determined that there is motion of the subject by the motion determination and it is determined that the distance to the subject determined by the distance determination is within a predetermined distance, and
the mode control unit causes the feature extraction mode to transition to the imaging mode in a case where it is determined that a specific feature is detected from the subject by the feature determination.

7. The information processing apparatus according to claim 4, wherein the distance detection unit performs the distance determination by using one or the plurality of pixel blocks included in a moving object detection area in which it is determined that there is motion of the subject.

8. The information processing apparatus according to claim 7, wherein, in a case where there is a plurality of the moving object detection areas, the distance detection unit performs the distance determination by using one or the plurality of pixel blocks included in a largest moving object detection area among the plurality of moving object detection areas.

9. The information processing apparatus according to claim 1,
wherein the motion detection unit further determines a shape of a moving object detection area in which it is determined that there is motion of the subject, and
the distance detection unit performs the distance determination to the subject in accordance with a determination result of the shape.

10. The information processing apparatus according to claim 9,
wherein the motion detection unit
determines the shape by comparing a size of the moving object detection area with a threshold, and
performs the distance determination by comparing a position in a screen of the moving object detection area for which the shape is determined with a threshold.

11. The information processing apparatus according to claim 10, wherein, in a case where the size of the moving object detection area is equal to or larger than the threshold and the position of the moving object detection area in the screen is equal to or smaller than the threshold, the distance detection unit performs the distance determination to the subject.

12. The information processing apparatus according to claim 1, further comprising: a previous frame determination unit that performs comprehensive determination of the motion determination and the distance determination by further using a result of the motion determination and a result of the distance determination at a second point in time that is a point in time one point in time before a reference point in time, in addition to a result of the motion determination and a result of the distance determination at a first point in time that is the reference point in time.

13. The information processing apparatus according to claim 1, wherein the plurality of second pixel signals is generated on a basis of reflected light of light from the subject received by the plurality of second pixels included in a TOF sensor or a sensor using a monocular ranging method.

14. An imaging device comprising:
a pixel array unit in which a plurality of first pixels and a plurality of second pixels are arrayed in a two-dimensional array;
a row scanning circuit that drives the plurality of first pixels and the plurality of second pixels to output the plurality of first pixel signals and the plurality of second pixel signals on a basis of a vertical synchronization signal;
a motion detection unit that performs motion extraction and motion determination of a subject on a basis of the plurality of first pixel signals;
a distance detection unit that performs distance determination to the subject on a basis of the plurality of second pixel signals; and
a mode control unit that causes a moving object detection mode in which low-resolution image information is acquired to transition to a feature extraction mode in which medium-resolution image information is acquired or an imaging mode in which high-resolution image information is acquired on a basis of a result of the motion determination and a result of the distance determination.

15. The imaging device according to claim 14,
wherein the row scanning circuit
drives one of the plurality of first pixels or the plurality of second pixels in one pixel block including the plurality of first pixels and the plurality of second pixels to output the plurality of first pixel signals or the plurality of second pixel signals, and
then drives another of the plurality of first pixels or the plurality of second pixels included in the pixel block to output the plurality of first pixel signals or the plurality of second pixel signals.

16. The imaging device according to claim 14,
wherein the row scanning circuit
drives the plurality of second pixels in the pixel array unit to output the plurality of second pixel signals, and
then drives the plurality of first pixels in the pixel array unit to output the plurality of first pixel signals.

17. The imaging device according to claim 14,
wherein the row scanning circuit
drives the plurality of first pixels in the pixel array unit to output the plurality of first pixel signals, and
then drives the plurality of second pixels in the pixel array unit to output the plurality of second pixel signals.

18. The imaging device according to claim 17, wherein the row scanning circuit drives the plurality of second pixels to output the plurality of second pixel signals in a line including a moving object detection area in which it is determined that there is motion of the subject.

19. The imaging device according to claim 17, wherein the row scanning circuit skips the driving of the plurality of second pixels in a case where it is not determined that there is the motion of the subject.

20. A program for causing a computer to execute processing of:
performing motion extraction and motion determination of a subject on a basis of a plurality of first pixel signals generated by a plurality of first pixels;
performing distance determination to the subject on a basis of a plurality of second pixel signals generated by a plurality of second pixels; and
causing a moving object detection mode in which low-resolution image information is acquired to transition to a feature extraction mode in which medium-resolution image information is acquired or an imaging mode in which high-resolution image information is acquired on a basis of a result of the motion determination and a result of the distance determination.
